# EUROPÄISCHE PATENTSCHRIFT

(11) **EP 3 625 950 B1**
(45) Veröffentlichungstag und Bekanntmachung des Hinweises auf die Patenterteilung: **09.09.2020**
(21) Anmeldenummer: 18814863.9
(22) Anmeldetag: 04.12.2018
(51) Int. Cl.: G06F 21/44, G06F 21/57, H04W 4/40, H04L 29/06, H04W 12/00, H04W 12/12

(54) **DATENVERARBEITUNGSEINRICHTUNG, GESAMTVORRICHTUNG UND VERFAHREN ZUM BETRIEB EINER DATENVERARBEITUNGSEINRICHTUNG ODER GESAMTVORRICHTUNG**
DATA-PROCESSING DEVICE, COMPLETE ENTITY, AND METHOD FOR OPERATING A DATA-PROCESSING DEVICE OR COMPLETE ENTITY
DISPOSITIF DE TRAITEMENT DE DONNÉES, DISPOSITIF TOTAL ET PROCÉDÉ POUR FAIRE FONCTIONNER UN DISPOSITIF DE TRAITEMENT DE DONNÉES OU UN DISPOSITIF TOTAL

(30) Priorität: 05.12.2017 DE 102017221889
(43) Veröffentlichungstag der Anmeldung: 25.03.2020
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); GRUBER, Hans Georg, 85049 Ingolstadt (DE); LERZER, Jürgen, 92318 Neumarkt (DE); DALKE, Christoph, 85110 Kipfenberg (DE)
(74) Vertreter: Bauer, Dominik Michael
(86) Internationale Anmeldenummer: PCT/EP2018/083421
(87) Internationale Veröffentlichungsnummer: WO 2019/110552

(56) Entgegenhaltungen:
- WO-A2-2010/144815
- US-A1- 2014 195 808
- US-A1- 2016 050 189
- US-B1- 9 582 669

## Beschreibung

Die Erfindung betrifft eine Datenverarbeitungseinrichtung, aufweisend wenigstens eine Recheneinheit und wenigstens eine ein paketbasiertes Kommunikationsprotokoll, insbesondere PCI Express, nutzende Schnittstelleneinheit, eine Gesamtvorrichtung mit mehreren Datenverarbeitungseinrichtungen und ein Verfahren zum Betrieb einer Datenverarbeitungseinrichtung oder Gesamtvorrichtung.

Moderne Datenverarbeitungssysteme als Teil von Gesamtvorrichtungen, beispielsweise Kraftfahrzeugen, nehmen an Komplexität heutzutage mit den steigenden Anforderungen an die Leistungsfähigkeit dieser Datenverarbeitungssysteme sowie die technologischen Möglichkeiten zur Optimierung dieser Datenverarbeitungssysteme zu. Datenverarbeitungssysteme von Gesamtvorrichtungen, beispielsweise Kraftfahrzeugen, sind dabei üblicherweise aus einer Mehrzahl an Datenverarbeitungseinrichtungen aufgebaut, die selbst eine große Leistungsfähigkeit aufweisen können, wobei jedoch gilt, dass auch eine schnelle und unkomplizierte Datenübertragung zwischen den Datenverarbeitungseinrichtungen über entsprechende Kommunikationsverbindungen sichergestellt werden muss. Dabei finden zunehmend Techniken, die auch für handelsübliche Personalcomputer eingesetzt werden, auch in anderen Gesamtvorrichtungen, beispielsweise Kraftfahrzeugen, Anwendung. Derartige Techniken umfassen auch insbesondere paketbasierte Punkt-zu-Punkt-Kommunikationsstandards, insbesondere den PCI Express-Kommunikationsstandard (PCIe-Kommunikationsstandard), der üblicherweise eingesetzt wird, um beispielsweise in einem Personalcomputer Peripherieeinrichtungen mit einem Chipsatz zu verbinden. PCI Express stellt eine der schnellsten verfügbaren Kommunikationsmethoden dar. Typische Anwendungsfälle für PCI Express sind Anwendungen, in denen große Datenmengen in äußerst kurzen Zeiten verarbeitet und/oder übertragen werden müssen. Um Verbindungen beispielsweise zwischen einem Chipsatz und mehreren Peripherieeinrichtungen herzustellen, ist es bekannt, Brückeneinrichtungen zwischenzuschalten, die beispielsweise als Multiplexer/Demultiplexer, Switch, Hub oder dergleichen ausgebildet sein können. Derartige Brückeneinrichtungen können "transparent" oder "nichttransparent" sein, mithin unmittelbar als Kommunikationspartner wirken oder aber eine über die Brückeneinrichtung erreichbare Datenverarbeitungseinrichtung als unmittelbaren Kommunikationspartner erscheinen lassen. Eine Vielzahl verschiedener Architekturen sind möglich und bekannt.

Bei einer Datenverarbeitungseinrichtung wird die Kommunikationsverbindung üblicherweise über entsprechende Ein-Ausgabe-Steuereinheiten, die auch als Schnittstelleneinheiten bezeichnet werden können, aufgebaut, beispielsweise einen PCIe-Mikrochip. Brückeneinrichtungen (Switches, Hubs, Multiplexer, Dimultiplexer) können als einzelner Mikrochip (System on a Chip" - SoC) oder auch als Mehrchip-Einrichtung ausgebildet sein. Die eigentlichen Kommunikationspartner (Datenverarbeitungseinrichtungen) werden üblicherweise als "Endpoints" bezeichnet und können ein Betriebssystem und/oder Treiber aufweisen, wobei die Handhabung der Interrupts und Lese-/Schreiboperationen durch den Treiber erfolgen können.

Bei Kommunikationsstandards wie PCI Express erhalten die Kommunikationspartner üblicherweise unmittelbaren Zugriff auf Speichermittel und Recheneinheiten der mit ihnen kommunizierenden Datenverarbeitungseinrichtungen. Dies gilt auch dann, wenn Gesamtvorrichtungen bzw. deren Datenverarbeitungssysteme sicherheitskritische Anteile aufweisen, welche mit weniger sicherheitskritischen Bereichen kommunizieren sollen. Beispielsweise ist es Kraftfahrzeugen bekannt, Fahrt- und/oder Sicherheitssystembezogene Steuergeräte, insbesondere auch im Hinblick auf autonomes Fahren, als Datenverarbeitungseinrichtungen als eher sicherheitskritische Datenverarbeitungseinrichtungen anzusehen, welche mithin einem Sicherheitsbereich zuzuordnen sind, der dennoch mit weniger sicherheitskritisch eingeordneten Datenverarbeitungseinrichtungen, insbesondere weiteren Steuergeräten, kommunizieren soll.

Das Vorsehen einer bidirektionalen Verbindung, die Zugriff auf Speichermittel und/oder Recheneinheiten in der sicherheitskritischen Datenverarbeitungseinrichtung erlaubt, würde jedoch weniger sicherheitskritisch eingestuften Datenverarbeitungseinrichtungen als Kommunikationspartner erlauben, Manipulationen innerhalb der sicherheitskritischen Datenverarbeitungseinrichtung vorzunehmen, beispielsweise dann, wenn der weniger sicherheitskritische Kommunikationspartner gehackt bzw. ersetzt worden ist und/oder die Kommunikationsdaten bei der Übertragung über die Kommunikationsverbindung manipuliert wurden.

Während hierfür an eher nachteilhafte monodirektionale Kommunikationsverbindungen oder eingeschränkte Rückkanäle gedacht werden könnte, schlägt die nachveröffentliche deutsche Patentanmeldung DE 10 2017 214 624.9 der Anmelderin ein Verfahren zum Filtern von über eine Kommunikationsverbindung, die Zugriff auf wenigstens ein Speichermittel einer empfangenden Datenverarbeitungseinrichtung gewährt, von einem Kommunikationspartner eingehenden Kommunikationsdaten in der Datenverarbeitungseinrichtung vor, bei dem in einer die Kommunikationsdaten entgegennehmenden Schnittstelleneinheit, insbesondere umfassend eine Ein-/Ausgabe-Steuereinheit und eine Ein-/Ausgabeeinheit, der Datenverarbeitungseinrichtung mittels eines wenigstens teilweise als Hardware ausgeführten Filtermittels gemäß einer wenigstens eine Zulassungsbedingung, die wenigstens eine Eigenschaft der in den Kommunikationsdaten enthaltenen Nutzdaten bewertet, enthaltenden, datenverarbeitungeinrichtungsseitig vorgegebenen Konfigurationsinformation nur die wenigstens eine Zulassungsbedingung erfüllende Kommunikationsdaten von der Schnittstelleneinheit zu wenigstens einer weiteren Komponente der Datenverarbeitungseinrichtung weitergeleitet werden. Mithin wird eine hardwarebasierte Firewall in Form eines Filtermittels realisiert, das seitens einer Schnittstelleneinheit, beispielsweise eines PCIe-Steuerchips, umgesetzt ist. Abhängig von der Konfigurationsinformation kann das Filtermittel die Zahl der verfügbaren Nutzdaten, insbesondere Steuersignale, die tatsächlich zu den relevanten Komponenten, insbesondere also Speichermittel und/oder Recheneinheit, weitergeleitet werden, auf das Notwendige und die Sicherheit sicherstellende Maß reduzieren. Auf diese Weise wird die Angriffsfläche über die Kommunikationsverbindung minimiert, ohne dass auf einen vollständig funktionalen Rückkanal verzichtet werden muss.

Problematisch bei Gesamtvorrichtungen wie Kraftfahrzeugen, die sich von Personalcomputern deutlich unterscheiden, ist ferner, dass deren Datenverarbeitungssysteme auf einem modularen Konzept beruhen, wobei die Kommunikationsverbindungen physikalisch für Angriffe erreichbar sind. Das bedeutet wiederum, dass auch nicht autorisierte Datenverarbeitungseinrichtungen, beispielsweise Steuergeräte, auf die Kommunikationsverbindungen zugreifen können und ihre eigenen Nutzdaten einbringen können, die gegebenenfalls nicht die Anforderungen für automotive Qualität und/oder Sicherheit erfüllen, so dass ein kompromittierter und/oder hinzugefügter "Endpoint" auch ein Sicherheitsproblem für das restliche Datenverarbeitungssystem darstellen kann. Dies gilt insbesondere bei Kommunikationsstandards, die den direkten Zugriff auf Komponenten von Kommunikationspartnern erlauben, beispielsweise auf Speichermittel und dergleichen.

Um diesbezüglich eine Verbesserung zu ermöglichen, schlägt die nachveröffentlichte deutsche Patentanmeldung DE 10 2017 213 010.5 eine Gesamtvorrichtung mit einer Authentifizierungsanordnung für eine ein Kommunikationsprotokoll nutzende Kommunikationsverbindung zwischen zwei Datenverarbeitungseinrichtungen der Gesamtvorrichtung, wobei die Datenverarbeitungseinrichtungen jeweils eine Ein--/Ausgabe-Steuereinheit für die Kommunikationsverbindung und eine Recheneinheit, insbesondere eine CPU und/oder eine GPU und/oder ein FPGA und/oder ein ASIC, vor, bei der die Ein--/Ausgabe-Steuereinheit jeweils ein wenigstens teilweise durch Hardware realisiertes, kryptografisches Verschlüsselungs-/Entschlüsselungsmittel zur Verschlüsselung wenigstens eines Teils der über die Kommunikationsverbindung zu übertragenden Nutzdaten als Teil der Authentifizierungsanordnung aufweisen, welches in einer insbesondere nicht anwendungsorientierten Kommunikationsschicht des Kommunikationsprotokolls auf die für die physikalische Nutzdatenübertragung vorbereiteten Nutzdaten bzw. die physikalisch empfangenen Nutzdaten angewendet wird, wobei jede Datenverarbeitungseinrichtung eine als eigene Hardware, auf die die Recheneinheit nicht zugreifen kann, und/oder logisch isoliert von der Recheneinheit umgesetzte, eine Trusted Execution Environment realisierende Sicherheitseinheit der Authentifizierungsanordnung mit jeweils wenigstens einer hardwarecodierten Schlüsselinformation aufweist, in deren Abhängigkeit die Nutzdaten durch das Verschlüsselungs-/Entschlüsselungsmittel verschlüsselt werden. Dort ist mithin eine als Hardware realisierte und somit gegenüber Manipulationen weniger anfällige Authentifizierungsanordnung vorgeschlagen, die über die Möglichkeit zur sicheren Kommunikation über die Kommunikationsverbindung wenigstens implizit, bevorzugt aber in einem Authentifizierungsvorgang, eine gegenseitige Authentifizierung der Datenverarbeitungseinrichtungen ermöglicht. Grundstock hierfür ist die in der Hardware der Sicherheitseinheit, auf die die Recheneinheit keinen Zugriff hat, fest codierte Schlüsselinformation, die für jeweils wenigstens ein Paar gegeneinander zu authentifizierender Datenverarbeitungseinrichtungen abgestimmt ist, wobei die Verschlüsselungsinformation für ein Paar von kommunizierenden Datenverarbeitungseinrichtungen auf symmetrischer Verschlüsselung, aber auch auf asymmetrischer Verschlüsselung beruhen kann. Im Fall symmetrischer Verschlüsselung umfasst die Verschlüsselungsinformation wenigstens einen gleichen Basisschlüssel, insbesondere für alle Datenverarbeitungseinrichtungen. Im Fall der asymmetrischen Verschlüsselung enthält jede Schlüsselinformation wenigstens den eigenen privaten Schlüssel und die öffentlichen Schlüssel aller vorgesehenen, zu authentifizierenden Kommunikationspartner.

In softwarebasierten Systemen wurden bereits sogenannte "Intrusion Detection Systems" (IDS) vorgeschlagen. Ein IDS wird genutzt, um kompromittierte Systeme zu erkennen und die Möglichkeit bereitzustellen, auf ein kompromittiertes System, das angegriffen wurde, zu reagieren (IPS - Intrusion Prevention System). Ein IDS fügt einem Gesamtsystem mehr Software hinzu und liefert daher zusätzliche Angriffswege, die ebenso hinsichtlich der Sicherheit berücksichtigt werden müssen, wenn eine Risikoanalyse durchgeführt wird. Zusätzlich bringen derartige IDS Leistungseinbußen mit sich, da Rechenleistung für die entsprechenden, das IDS realisierenden Softwaremittel benötigt wird. In der nachveröffentlichten deutschen Patentanmeldung DE 10 2017 219 242.9 der Anmelderin wurde zur Realisierung eines verbesserten IDS in einem Ein-Chip-System für ein solches Ein-Chip-System, aufweisend mehrere Recheneinheiten, insbesondere Rechenkerne und/oder CPUs, wenigstens eine Ein-/Ausgabeeinheit, eine Speichereinheit und eine Ein-/Ausgabe-Steuereinheit, die die Kommunikation zwischen den Recheneinheiten und der wenigstens einen Ein-/Ausgabeeinheit koordiniert, vorgeschlagen, dass das Ein-Chip-System ferner eine als Hardware realisierte Angriffsdetektionseinheit aufweist, welche über eine Hardware-Signalverbindung wenigstens mit der Ein-/Ausgabe-Steuereinheit als Komponente des Ein-Chip-Systems verbunden ist und von der Ein-/Ausgabe-Steuereinheit empfangene Eingangssignale bezüglich einer zu protokollierenden und/oder mit wenigstens einer Maßnahme zu beantwortenden Regelverletzung eines Angriffsdetektionsregelsatzes auswertet. Die Angriffsdetektionseinheit bildet somit einen Teil eines IDS oder sogar eines IDPS (Intrusion Detection and Prevention System). Signale von bevorzugt mehreren Komponenten des Ein-Chip-Systems, umfassend wenigstens die Ein-/Ausgabe-Steuereinheit, werden genutzt und hinsichtlich eines möglichen Angriffs ausgewertet, idealerweise vollkommen unabhängig vom restlichen Betrieb des Ein-Chip-Systems, was es insbesondere ermöglicht, einem Angreifer die Illusion zu geben, seine Tätigkeit sei noch gar nicht festgestellt worden. Es wird also eine zusätzliche Hardware innerhalb des Ein-Chip-Systems hinzugefügt, die wenigstens Hardware-Signalverbindungen von verschiedenen hardwarebasierten Komponenten des Ein-Chip-Systems zu einem abgetrennten IDS umfasst. Die Verwendung eines derart abgetrennten IDS vermeidet die Verwendung reiner, angreifbarer Software, fügt mithin keine neuen Angriffspunkte hinzu, da das IDS über die zusätzlichen, anderweitigen nicht genutzten Hardware-Signalverbindungen arbeitet und mit den sonstigen Recheneinheiten idealerweise nicht empfangend oder angreifbar interagiert. Somit ist auch ein minimaler Einfluss auf existierende Sicherheitsmechanismen gegeben und es ist sichergestellt, dass das IDS selbst in einem sicheren Bereich des Ein-Chip-Systems vorgesehen ist. Die Detektion eines Angriffs bzw. einer Korruption des Ein-Chip-Systems kann nicht hinter einem infizierten, insbesondere bereits übernommenen Teil des Ein-Chip-Systems versteckt werden; die Nutzung getrennter, bevorzugt zusätzlicher Hardware ermöglicht es ferner, dass IDS ohne Einbußen der Rechenleistung der Recheneinheiten umzusetzen.

Für Datenverarbeitungseinrichtung einer Gesamtvorrichtung, insbesondere eines Kraftfahrzeugs, besteht trotz dieser Vorschläge ein weiterer Verbesserungsbedarf.

WO 2010/144815 A2 betrifft Systeme und Verfahren zur Bereitstellung von Netzwerksicherheit für ein Fahrzeuginformationssystem, insbesondere ein Flugzeug. Dabei stellen sich verschiedenste Probleme, beispielsweise die Tatsache, dass vertrauliche Daten beim Bezahlen benötigt werden oder dass Passagiere eigene Geräte ("LRU") anschließen wollen. Entsprechend wird vorgeschlagen, zusätzlich zu dem Fahrzeuginformationssystem ein Sicherheitssystem bereitzustellen, nämlich konkret ein "all-in-one security system", welches mithin insbesondere sichere Speichermittel zum Speichern von Verschlüsselungs-/Entschlüsselungsschlüsseln aufweisen kann, Speichermittel für sicherheitsbezogene APIs, Speichermittel für ein Sicherheitslogfile, Speichermittel für private Daten, Antivirus-Software, Anti-Spyware, eine Anwendungs-Firewall, eine Netzwerk-Firewall, ein IPS und/oder ein IDS, sowie weitere Komponenten.

Der Erfindung liegt daher die Aufgabe zugrunde, eine im Hinblick auf die Sicherheit und/oder die Nachvollziehbarkeit von Angriffen weiter verbesserte Datenverarbeitungseinrichtung bzw. ein weiter verbessertes Datenverarbeitungssystem einer Gesamtvorrichtung anzugeben.

Zur Lösung dieser Aufgabe sind erfindungsgemäß eine Datenverarbeitungseinrichtung gemäß Anspruch 1, eine Gesamtvorrichtung gemäß Anspruch 7 oder 8 und ein Verfahren gemäß Anspruch 9 vorgesehen. Vorteilhafte Ausgestaltungen ergeben sich aus den Unteransprüchen.

Eine als ein Ein-Chip-System ausgebildete Datenverarbeitungseinrichtung der eingangs genannten Art weist erfindungsgemäß ferner eine insbesondere als Hardware realisierte Angriffsdetektionseinheit auf, die über wenigstens eine Signalverbindung, insbesondere eine Hardware-Signalverbindung, mit einem Filtermittel der Schnittstelleneinheit und/oder einer als Trusted Execution Environment realisierten Sicherheitseinheit einer auf das Kommunikationsprotokoll bezogenen Authentifizierungsanordnung verbunden ist und über die wenigstens eine Signalverbindung erhaltene Eingangssignale bezüglich einer zu protokollierenden und/oder mit wenigstens einer Maßnahme zu beantwortenden Regelverletzung eines Angriffsdetektionsregelsatzes auswertet, wobei das wenigstens teilweise als Hardware ausgebildete Filtermittel dazu ausgebildet ist, gemäß einer wenigstens eine Zulassungsbedingung, die wenigstens eine Eigenschaft der in von der Ein-/Ausgabeeinheit empfangenen Kommunikationsdaten enthaltenen Nutzdaten bewertet, enthaltenden, datenverarbeitungseinrichtungsseitig vorgegebenen Konfigurationsinformation nur die wenigstens eine Zulassungsbedingung erfüllende Kommunikationsdaten von der Schnittstelleneinheit zu wenigstens einer weiteren Komponente der Datenverarbeitungseinrichtung weiterzuleiten, wobei sich wenigstens eine Angriffsdetektionsregel auf die Verletzung wenigstens einer Zulassungsbedingung und/oder auf einen Authentifizierungsfehler bezieht.

Während also in den bereits zitierten deutschen Patentanameldungen DE 10 2017 214 624.9 und DE 10 2017 213 010.5 zum Erreichen höchster Sicherheitsstandards und einer starken Trennung zwischen sicherheitsrelevanten und weniger sicherheitsrelevanten Bereichen, insbesondere Kommunikationspartnern, neue Hardware vorgeschlagen wurde, insbesondere also die Sicherheitseinheit und das Filtermittel, ist es zum einen auch äußerst wichtig, festzustellen, dass das Datenverarbeitungssystem angegriffen wird, während sich auf der anderen Seite gezeigt hat, dass in der zusätzlichen Hardware zur Realisierung der Authentifizierung/Verschlüsselung sowie der Filtermechanismen generierte Information besonders geeignet ist, eine Angriffsdetektion für das Kommunikationsprotokoll, bevorzugt PCIe (PCI Express), umzusetzen. Dabei hat sich insbesondere ein besonders hohes Synergiepotential gezeigt, das erfindungsgemäß dadurch genutzt wird, dass der Angriffsdetektionsregelsatz auf die Schutzmechanismen des Filtermittels und/oder der Sicherheitseinheit abgestimmt ist, mithin Verletzungen von deren Regelsätzen unmittelbar in eine entsprechende Angriffsdetektion umgesetzt werden können. Dabei wird bevorzugt eine als von der Schnittstelleneinheit und der wenigstens einen Recheneinheit getrennte Hardware realisierte Angriffsdetektionseinheit, die über Hardware-Signalverbindungen mit den Quellen der Eingangssignale verbunden ist, verwendet, wobei über die Hardware-Signalverbindungen insbesondere keinerlei den Betrieb der Angriffsdetektionseinheit beeinflussende Steuerbefehle entgegengenommen werden. Auf diese Weise ist eine äußerst schwer manipulierbare Umsetzung gegeben. Es ist ferner bevorzugt, wenn das durch die Angriffsdetektionseinheit realisierte IDS, insbesondere also das PCIe-IDS, passiv angelegt ist, um die Leistungsfähigkeit der Datenverarbeitungseinrichtung und ihre Funktionalität möglichst nicht zu beeinflussen. Die Angriffsdetektionseinheit liest über die Eingangssignale letztlich mit, was in der Sicherheitseinheit und/oder dem Filtermittel geschieht und analysiert diese Vorgänge anhand des Angriffsdetektionsregelsatzes. Fehlfunktionen, wie beispielsweise Authentifizierungsfehler und/oder Verschlüsselungsfehler, werden durch die Sicherheitseinheit als Eingangssignale an die Angriffsdetektionseinheit weitergeleitet und/oder Verletzungen der Zulassungsbedingungen, beispielsweise eine Überschreitung eines zulässigen Kommunikationsdatendurchsatzes, für in der Transportschicht bearbeiteten Nachrichten bzw. die Nachrichten selbst werden von dem Filtermittel als Eingangssignale bereitgestellt.

Dabei kann die Ausgestaltung der Sicherheitseinheit und/oder der Angriffsdetektionseinheit und/oder des Filtermittels entsprechend den eingangs bereits genannten, durch Bezugnahme in diese Offenbarung aufgenommenen nachveröffentlichten Patentanmeldungen DE 10 2017 214 624.9, DE 10 2017 213 010.5 und DE 10 2017 219 242.9 erfolgen.

So kann in einer konkreten Ausgestaltung der Erfindung vorgesehen sein, dass die Authentifizierungsanordnung ein Verschlüsselungs-/Entschlüsselungsmittel der Schnittstelleneinheit zur Verschlüsselung wenigstens eines Teils der über eine Kommunikationsverbindung mit einer weiteren Datenverarbeitungseinrichtung übertragenen Nutzdaten, wobei das Verschlüsselungs-/Entschlüsselungsmittel in einer Kommunikationsschicht des Kommunikationsprotokolls auf die für die physikalischen Nutzdaten übertragenen vorbereiteten Nutzdaten bzw. die physikalisch empfangenen Nutzdaten angewendet wird, und die als eigene Hardware, auf die die Recheneinheit nicht zugreifen kann, und/oder logisch isoliert von der Recheneinheit umgesetzte Sicherheitseinheit mit einer hardwarecodierten Schlüsselinformation, in deren Abhängigkeit die Nutzdaten durch das Verschlüsselungs-/ Entschlüsselungsmittel verschlüsselt werden, aufweist.

Die als Hardware realisierte und somit gegenüber Manipulationen weniger anfällige Authentifizierungsanordnung stellt über die Möglichkeit zur sicheren Kommunikation über die Kommunikationsverbindung wenigstens implizit, bevorzugt aber in einem Authentifizierungsvorgang, eine gegenseitige Authentifizierung von Datenverarbeitungseinrichtungen bereit. Grundstock hierfür ist die in der Hardware der Sicherheitseinheit, auf die die Recheneinheit keinen Zugriff hat, fest codierte Schlüsselinformation, die für jeweils wenigstens ein Paar gegeneinander zu authentifizierender Datenverarbeitungseinrichtungen abgestimmt sein kann, wobei die Verschlüsselungsinformation für ein Paar von kommunizierenden Datenverarbeitungseinrichtungen auf symmetrischer Verschlüsselung, aber auch auf asymmetrischer Verschlüsselung beruhen kann. Im Fall symmetrischer Verschlüsselung umfasst die Verschlüsselungsinformation wenigstens einen gleichen Basisschlüssel, insbesondere für alle Datenverarbeitungseinrichtungen. Im Fall der asymmetrischen Verschlüsselung enthält jede Schlüsselinformation wenigstens den eigenen privaten Schlüssel und die öffentlichen Schlüssel aller vorgesehenen, zu authentifizierenden Kommunikationspartner.

Dabei kann die Authentifizierung, wie angedeutet, im Wesentlichen implizit durch das hier beschriebene Verschlüsselungskonzept erfolgen, wobei bevorzugt ein expliziter Authentifizierungsvorgang eingesetzt werden kann, insbesondere zu Beginn jeder Kommunikationssitzung im Rahmen des oder zusätzlich zum Aushandeln eines Sessionschlüssels oder gänzlich ohne Schlüsselaushandlung. Beliebige, grundsätzlich bekannte Authenfifizierungsvorgänge können eingesetzt werden. Zweckmäßigerweise erfolgt zu Beginn einer Kommunikationssitzung zunächst eine Authentifizierung, wonach eine Aushandlung eines Sessionschlüssels bei erfolgreicher Authentifizierung stattfindet. Nicht authentifizierte Datenverarbeitungseinrichtungen, beispielsweise entsprechend kompromittierte und/oder ersetzte Datenverarbeitungseinrichtungen, werden "nicht verstanden", können sich nicht authentifizieren oder durch Abwesenheit jeglicher Verschlüsselung entdeckt. Die vorliegende Erfindung sorgt mithin dafür, dass nur zugelassene (also passende/abgestimmte Schlüsselinformationen aufweisende) Datenverarbeitungseinrichtungen wie vorgesehen kommunizieren können. Die hierbei entstehenden Fehler, insbesondere im Fall eines Angriffs, können als Eingangssignale an die Angriffsdetektionseinheit berichtet werden.

Es kann im Rahmen der Erfindung mithin konkret vorgesehen sein, dass wenigstens eines der von der Sicherheitseinheit an die Angriffsdetektionseinheit übermittelten Eingangssignale einen Authentifizierungsfehler und/oder einen Verschlüsselungsfehler beschreibt.

Die Sicherheitseinheit realisiert eine Trusted Execution Environment (TEE, vertrauenswürdige Laufzeitumgebung). Die Sicherheitseinheit umfasst neben den hardwarecodierten Schlüsselinformationen auch ein durch Hardware realisiertes und/oder isoliertes Betriebssystem zur Schlüsselverwaltung und gegebenenfalls Durchführung eines Authentifizierungsvorgangs und/oder zur Schlüsselaushandlung, wenn ein Sessionschlüssel für die aktuelle Kommunikationssitzung ausgehandelt werden soll, worauf im Folgenden noch näher eingegangen werden wird. Das Betriebssystem kann dabei auch zu Auswahl, Zusammenstellung und/oder Weitergabe der Eingangssignale für die Angriffsdetektionseinheit ausgebildet sein.

Ein durch Hardware realisiertes entsprechendes Betriebssystem ist insbesondere wegen der geringen gebotenen Angriffsfläche bevorzugt. Allgemein sieht eine bevorzugte Ausgestaltung der Erfindung in diesem Kontext vor, dass zumindest der die Eingangssignale für die Angriffsdetektionseinheit erzeugende Anteil der Sicherheitseinheit wenigstens teilweise als Hardware ausgebildet ist. So kann die Übermittlung der Eingangssignale auch bei einem Angriff immer sichergestellt werden.

Es kann also gesagt werden, dass als neue Komponenten einer Authentifizierungsanordnung die Sicherheitseinheit als Trusted Execution Environment, die die Schlüsselinformationen beinhaltet und verwaltet, und ein möglichst nahe an den physikalisch zu übertragenden Nutzdaten liegendes kryptografisches Verschlüsselungs-/Entschlüsselungsmittel, insbesondere in einer Transportschicht und/oder Kommunikationsschicht, bereitgestellt wird. Die Sicherheitseinheit stellt mit der Trusted Execution Environment also einen Ausführungskontext bereit, der von dem wenigstens einen normalen Betriebssystem der Datenverarbeitungseinrichtung isoliert ist. Das Schlüsselmanagement und das sichere Speichern der Schlüsselinformation soll genauso in der Sicherheitseinheit stattfinden wie gegebenenfalls vorgesehene sichere Berechnungen, beispielsweise Schlüsselgenerierung, Authentifizierungsvorgang, Schlüsselverhandlung (Key Agreement) und Zusammenstellen von an die Angriffsdetektionseinheit zu übermittelnden Eingangssignalen.

Damit ergibt sich zusammenfassend eine starke, auf Angriffe überwachbare Authentifizierung jeder Datenverarbeitungseinrichtung der Gesamtvorrichtung, insbesondere des Kraftfahrzeugs, wobei die Möglichkeit besteht, das Datenverarbeitungssystem des Kraftfahrzeugs mit autorisierten Partnern zu erweitern. Beispielsweise können geeignete Schlüsselinformationen, die hardwarezucodieren sind, an entsprechende Kooperationspartner weitergegeben werden. Der Begriff des "Hardwarecodierens" ist dabei so zu verstehen, dass die Schlüssel in die Sicherheitseinheit geschrieben werden, ggf. in Form einer Schaltung, und danach mit bekannten Mitteln unveränderbar gestaltet wird.

Unbekannte Datenverarbeitungseinrichtungen dritter Parteien können vermieden werden, da die sichere Kommunikation unmöglich ist und/oder das Authentifizieren/das Aushandeln von Sessionschlüsseln scheitert. Entsprechende Angriffe werden zugleich verlässlich durch die Angriffsdetektionseinheit detektiert. Durch die Auslagerung der Authentifizierung in Hardwarekomponenten wird die Qualitätsüberprüfung von Softwarekomponenten der Datenverarbeitungseinrichtungen vereinfacht, nachdem die Authentifizierung auf einem Hardware-Niveau stattfindet. Die Authentifizierungsanordnung erlaubt das Verhindern physikalischer Umbaumaßnahmen und Angriffe und gemeinsam mit der Angriffsdetektionseinheit deren Detektion, was insbesondere für Gesamtvorrichtungen wie Kraftfahrzeuge vorteilhaft ist, da hier die Kommunikationsverbindungen physikalisch relativ einfach zugänglich sind. Die verschlüsselten Nutzdaten können dann von einem externen Analysemittel nicht verstanden werden. Das beschriebene Konzept ist insgesamt als anwendungstransparent zu bezeichnen, nachdem alle Schutz- und Detektionsmechanismen in Hardware und ggf. Low-Level-Software implementiert werden.

Es sei noch angemerkt, dass zur eigentlichen Hardwarecodierung der Schlüsselinformation verschiedene Möglichkeiten existieren. Beispielsweise ist es denkbar, die Schlüsselinformation bereits beim Hersteller der Sicherheitseinheit, welche beispielsweise als eigener Mikrochip ausgebildet sein kann, festzulegen und in die Sicherheitseinheit hardwarecodiert einzubringen. Jedoch kann auch ein Hersteller der Gesamtvorrichtung an sich, beispielsweise bei einem Kraftfahrzeug am Bandende, die Schlüsselinformation hardwarecodieren. Dabei kann vorgesehen sein, dass ein vorläufiger Generalschlüssel innerhalb der Sicherheitseinheit vorliegt, der genutzt werden kann, um die eigene Schlüsselinformation zu ergänzen und hardwarezucodieren und schließlich den noch nicht geschlossenen Mikrochip der Sicherheitseinheit abzuschließen ("fusing"). Dies gilt sowohl für symmetrische Schlüsselinformationen, mithin insbesondere gemeinsame Basisschlüssel, als auch für asymmetrische Schlüsselinformationen.

Mit besonderem Vorteil kann vorgesehen sein, dass die Kommunikationsschicht eine Transportschicht und/oder eine Transaktionsschicht. Eine besonders vorteilhafte Ausgestaltung der vorliegenden Erfindung ergibt sich, wie bereits dargelegt, wenn als Kommunikationsprotokoll (Kommunikationsstandard) PCI Express (PCIe) gewählt wird, wobei dann das Verschlüsselungs-/Entschlüsselungsmittel bevorzugt einer Transaktionsschicht zugeordnet ist, mithin auf die für den physikalischen Transport vorbereiteten, entsprechend formatierten Nutzdaten, konkret TLPs (Transaction Layer Packages), angewendet wird.

In einer zweckmäßigen Weiterbildung der Erfindung kann vorgesehen sein, dass bei dem paketbasierten Kommunikationsprotokoll nur ein, insbesondere dynamisch oder nutzerseitig einstellbarer, Anteil der zu versendenden Nutzdatenpakete verschlüsselt wird, wobei der Verschlüsselungszustand in einer Informationseinheit, insbesondere einem Verschlüsselungsbit, des Headers des jeweiligen Nutzdatenpakets angezeigt wird. Um Verschlüsselungs- und Entschlüsselungsaufwand zu sparen, ist es mithin denkbar, nur eine teilweise Verschlüsselung vorzunehmen, wofür bevorzugt ein entsprechendes Verschlüsselungsbit innerhalb des Headers der Nutzdatenpakete entsprechend gesetzt wird, wenn eine Verschlüsselung vorliegt. Allgemein kann dabei auch von einem Verschlüsselungsindikator geredet werden. Die Rate der Verschlüsselung kann dabei durch einen Benutzer gewählt werden, beispielsweise hardwarecodiert von einem Hersteller der Gesamtvorrichtung vorgegeben werden, aber auch dynamisch anpassbar sein, so dass beispielsweise vorgesehen sein, dass die Rate der verschlüsselten Nutzdatenpakete in Abhängigkeit einer gewollten Datenübertragungsgeschwindigkeit für die Nutzdaten gewählt wird. Auf diese Weise kann ein Gleichgewicht zwischen der Sicherheit, die die Verschlüsselung bietet, und dem Einsparen an Aufwand für hohe Datenübertragungsgeschwindigkeiten geschaffen werden. Zudem kann auch an dieser Stelle eine Angriffsdetektion ansetzen, indem beispielsweise überprüft wird, ob bei einer teilweisen Verschlüsselung zu viele oder zu weniger Pakete verschlüsselt sind. Dabei werden entsprechende Eingangssignale für die Angriffsdetektionseinheit erzeugt.

In einer besonders vorteilhaften Ausgestaltung kann vorgesehen sein, dass die Sicherheitseinheit wenigstens einen Absicherungsmechanismus gegen ein Aus- oder Ablesen der Schlüsselinformation aufweist. Es wurden bereits beispielsweise spezielle Mikrochips vorgeschlagen, bei denen bei einem physikalischen Eingriff an dem Mikrochip dennoch ein eingespeicherter Schaltkreis/eine eingespeicherte Schlüsselinformation unlesbar wird. Beispielsweise kann die Sicherheitseinheit als ein sicherer Kryptoprozessor ("secure cryptoprocessor") realisiert werden, bei dem wenigstens eine physikalische Sicherheitsmaßnahme als Absicherungsmechanismus vorgesehen ist, wie dies beispielsweise bei Smartcards bekannt ist. Als Absicherungsmechanismen sind auch Ausgestaltungen denkbar, in denen bei einer Zerstörung der physikalischen Integrität der Sicherheitseinheit eine automatische Zerstörung der gespeicherten Schlüsselinformation erfolgt. Absicherungsmechanismen können auch Abschirmschichten umfassen, die das Auslesen interner Signale verhindern und dergleichen.

Grundsätzlich ist es denkbar, die hardwarecodierte Schlüsselinformation unmittelbar zu nutzen, um die Entschlüsselung/Verschlüsselung der Nutzdaten vorzunehmen, so dass ein Aushandeln eines für eine Kommunikationssitzung zu verwendenden Sessionschlüssels (Session Key) nicht notwendig ist. Jedoch hat es sich, insbesondere im Hinblick auf die Authentifizierung, als zweckmäßig erwiesen, wenn die Authentifizierungsanordnung zum Aushandeln eines für eine Kommunikationssitzung zu verwendenden Sessionschlüssels in Abhängigkeit der Schlüsselinformation ausgebildet ist, insbesondere nach einer gegenseitigen Authentifizierung im Rahmen eines die Schlüsselinformation nutzenden Authentifizierungsvorgangs. Dabei wird es üblicherweise so sein, dass die Sicherheitseinheiten über die Kommunikationsverbindung kommunizieren, um sich auf einen Sessionschlüssel zu einigen und ggf. einen Authentifizierungsvorgang auch getrennt durchzuführen. Die Schlüsselinformation dient dabei als eine "shared information", also geteilte Information, die der Authentifizierung und/oder den Verhandlungen und/oder dem Generieren des Sessionschlüssels zugrunde zu legen ist, um die Authentifizierung durch die Authentifizierungsanordnungen zu ermöglichen. Dabei sind verschiedene Möglichkeiten zum Aushandeln eines Schlüssels denkbar, insbesondere auch asymmetrische Aushandlungsverfahren, beispielsweise Diffie-Hellman-Verfahren. Es ist auch denkbar, dass das Aushandeln des Sessionschlüssels als Authentifizierungsvorgang verstanden werden kann, wenn keine explizite Authentifizierung vor- oder zwischengeschaltet ist. Anders ausgedrückt liefert dann der Authentifizierungsvorgang den "Sessionschlüssel".

Eine andere vorteilhafte Weiterbildung sieht vor, dass bei einer symmetrischen Schlüsselinformation, die für jede Datenverarbeitungseinrichtung wenigstens einen gleichen Basisschlüssel umfasst, mehrere Basisschlüssel vorgesehen sind und/oder die Sicherheitseinheit zur Ableitung verschiedener Subschlüssel aus dem Basisschlüssel ausgebildet ist. Gründe dafür, unterschiedliche Basisschlüssel vorzusehen, existieren in größerer Zahl. So kann beispielsweise über die Basisschlüssel die Authentifizierung nach weiteren Kriterien angepasst werden, beispielsweise für unterschiedliche Modelle der Gesamtvorrichtung jeweils ein unterschiedlicher Schlüssel bereitgestellt werden, um auch hinsichtlich der Authentifizierung eine Unterscheidung zu gestatten. Allgemein kann gesagt werden, dass ein zu verwendender Schlüssel anhand einer Eigenschaft der Gesamtvorrichtung und/oder eines den Einsatz der Gesamtvorrichtung beschreibenden Einsatzparameters wählbar ist. Neben dem genannten Beispiel der unterschiedlichen Modelle der Gesamtvorrichtung ist es beispielsweise auch denkbar, regionenspezifische Basisschlüssel vorzusehen, über die unterschiedlichen lokalen Gegebenheiten Rechnung getragen werden kann und/oder ein lokal unterschiedliches Verhalten herbeigeführt werden kann. Denkbar ist es ferner, den Schlüsseln eine bestimmte Haltbarkeit und/oder einen gewissen Zeitraum zuzuordnen, so dass beispielsweise Basisschlüssel für bestimmte Gültigkeitszeiträume vorhanden sind. Besonders vorteilhaft ist es hierbei, wenn die mehreren Basisschlüssel als Schlüsselbaum auf einem nicht eingespeicherten und/oder niemals unmittelbar verwendeten, geheimen Rootschlüssel basieren. Auf diese Weise lassen sich die mehreren Basisschlüssel also aus einem gemeinsamen, geheimen und somit speziell absicherbaren Rootschlüssel ableiten, der selbst außerhalb der Sicherheitseinheit nicht zum Einsatz kommen muss. Mithin kann vorgesehen sein, dass der Rootschlüssel nicht nach außerhalb der Sicherheitseinheit weitergegeben wird. So ist eine weitere Erhöhung der Sicherheit denkbar, beispielsweise, indem zeitlich gültige Basisschlüssel aus dem Rootschlüssel abgeleitet werden und dergleichen.

Gerade auch das Nutzen mehrerer Schlüssel kann eine hervorragende Grundlage für eine Abstimmung des Angriffsdetektionsregelsatzes bieten, insbesondere, wenn bei der Auswertung der Eingangssignale oder einer folgenden, ggf. auch externen Auswertung weiterer Informationen vorliegen, beispielsweise eine aktuelle Region, ein aktuelles Modell der Gesamtvorrichtung und dergleichen.

Die Sicherheitseinheit und/oder die Angriffsdetektionseinheit kann als ein Ein-Chip-System mit der Recheneinheit und/oder der Schnittstelleneinheit oder als eigener Sicherheitschip ausgebildet sein. Konkret kann vorgesehen sein, dass die Sicherheitseinheit und/oder die Angriffsdetektionseinheit als vertrauenswürdige Zone des Ein-Chip-Systems oder als eingebettetes Sicherheitselement des Ein-Chip-Systems oder als Trusted Platform Module (TPM) ausgebildet ist. Auch bei Ein-Chip-Systemen (SoC) sind inzwischen Maßnahmen/Mechanismen bekannt, um einen Zugriff eines allgemeinen Betriebssystems, beispielsweise eines Betriebssystems der Recheneinheit und/oder der Schnittstelleneinheit, auf einen bestimmen Hardware-Teilabschnitt, insbesondere eine vertrauenswürdige Zone und/oder ein eingebettetes Sicherheitselement, zu verhindern. Beispielsweise sind Technologien bekannt, in denen übliche Nachrichten/Operationen in 32-Bit-Technologie übertragen werden, während in einem vertrauenswürdigen Hardware-Abschnitt des Ein-Chip-Systems ein 33. Bit mitverwendet wird, welches die sicheren Anteile kennzeichnet ("SecureBit"). Entsprechende Technologien können auch im Rahmen der vorliegenden Erfindung eingesetzt werden, um besonders kompakte und dennoch sichere Ausgestaltungen der Datenverarbeitungseinrichtung zu ermöglichen.

Was das Filtermittel angeht, liegt diesem die Idee zugrunde, seitens der empfangenden, insbesondere als sicherheitskritisch bewerteten bzw. in einem Sicherheitsbereich liegenden Datenverarbeitungseinrichtung eine hardwarebasierte Firewall in Form eines Filtermittels zu realisieren, das seitens einer Schnittstelleneinheit, beispielsweise eines PCIe-Steuerchips, realisiert ist. Dabei können die Nutzdaten insbesondere auf das wenigstens eine Speichermittel wirkende Steuerbefehle umfassen, wobei das Filtermittel wenigstens auf die Steuersignale angewendet wird. Jedoch ist das hier beschriebene Vorgehen auch auf sonstige Nutzdaten in den Kommunikationsdaten anwendbar, da auch für sonstige Nutzdaten gelten kann, dass diese im Speicher einer Datenverarbeitungseinrichtung und/oder in einer Recheneinheit einer Datenverarbeitungseinrichtung Schaden anrichten können. Abhängig von der Konfigurationsinformation kann das Filtermittel die Zahl der verfügbaren Nutzdaten, insbesondere Steuersignale, die tatsächlich zu den relevanten Komponenten, insbesondere also einem Speichermittel und/oder der Recheneinheit, weitergeleitet werden, auf das Notwendige und die Sicherheit sicherstellende Maß reduzieren. Auf diese Weise wird die Angriffsfläche über die Kommunikationsverbindung minimiert, ohne dass auf einen vollständig funktionalen Rückkanal verzichtet werden muss. Nicht weitergeleitete Nachrichten/Kommunikationsdaten im Allgemeinen stellen wiederum eine hervorragende Grundlage zur Analyse einer Angriffssituation dar.

Die Konfiguration des Filtermittels erfolgt dabei bevorzugter Weise durch die Datenverarbeitungseinrichtung selber, wobei ein separater Konfigurationskanal innerhalb der Datenverarbeitungseinrichtung, insbesondere ausgehend von der Recheneinheit, und/oder ein bestehendes Konfigurationsinterface der Schnittstelleneinheit genutzt werden kann. Das bedeutet aber, dass jede Datenverarbeitungseinrichtung in einem Datenverarbeitungssystem der Gesamtvorrichtung selbst Kontrolle über die eingehenden und auszufilternden Nachrichten über die Kommunikationsverbindung hat. Im Gegensatz zu einer Ausgestaltung, in der Zugriff auf eine Wächtereinrichtung zentral Manipulationsmöglichkeiten im gesamten Datenverarbeitungssystem eröffnet, schützt das Filtermittel gegen eingehende Angriffe und verleiht ein Maximum an Autonomie an die Datenverarbeitungseinrichtung als Subsystem.

Mit anderen Worten bedeutet dies, dass unabhängig davon, ob Anteile des Datenverarbeitungssystems kompromittiert sind, die Datenverarbeitungseinrichtung ihre eigene Firewall in Form des Filtermittels nutzen kann. Es existiert keine Master-Einrichtung, die die Firewall-Konfigurationsinformation verändern könnte, denn nur die Datenverarbeitungseinrichtung selbst kann die Konfiguration verändern. Weiterhin gilt, dass jede Datenverarbeitungseinrichtung auf eingehende Angriffe reagieren kann und durch entsprechende Umkonfiguration des Filtermittels die Kommunikationsverbindung reduzieren oder gar gänzlich schließen kann.

Ein weiterer massiver Vorteil des vorgesehenen Filtermittels ist die Tatsache, dass der Inhalt der Kommunikationsdaten, also die Nutzdaten (Payload), ebenso durch das Filtermittel und ggf. zusätzlich danach durch die Angriffsdetektionseinheit beurteilt werden kann. Während die im Stand der Technik bekannten Ansätze als "Stateless Packet Inspection" bezeichnet werden können, kann die vorliegende Erfindung als "Stateful Packet Inspection" bezeichnet werden. Es wird mithin nicht bzw. nicht nur beurteilt, welche Herkunft, welches Ziel und welche Kommunikationsstrecke die Kommunikationsdaten genommen haben, sondern auch der Inhalt. Dabei muss im Übrigen nicht zwangsläufig unmittelbar auf die Nutzdaten zugegriffen werden, sondern es ist denkbar, dass bei einer paketbasierten Kommunikation im Header entsprechende Eigenschaften der Kommunikationsdaten enthalten sind, auf die die Zulassungsbedingung zugreifen kann. Die wenigstens teilweise Ausgestaltung des Filtermittels in Hardware, insbesondere also die Integration in einen die Schnittstelleneinheit bildenden Chip, schränkt die Manipulationsmöglichkeiten weiter ein.

Insgesamt erlaubt die Filterung des Kommunikationsverkehrs innerhalb der Datenverarbeitungseinrichtung selbst, aber außerhalb der Recheneinheit und der Speichermittel, eine strenge Trennung in verteilten Systemen von Datenverarbeitungseinrichtungen. Das Filtermittel in der Schnittstelleneinheit, insbesondere also in einem externen Chip, erlaubt zudem die Nutzung einfacherer Restkomponenten, insbesondere Recheneinheiten, beispielsweise CPUs, in sicherheitskritischen Datenverarbeitungseinrichtungen, die den Kommunikationsstandard der Kommunikationsverbindung nutzen. Das Outsourcen des Filtermittels in die Schnittstelleneinheit erniedrigt also die Komplexität der Datenverarbeitungseinrichtung an sich. Der hier beschriebene Mechanismus kann auch in gemultiplexten/demultiplexten Kommunikationsverbindungen eingesetzt werden. Insbesondere muss eine eingesetzte Brückeneinrichtung keinerlei Information über die Filtervorgänge haben.

In einer besonders bevorzugten Ausgestaltung der Erfindung kann vorgesehen sein, dass das Filtermittel in einer auf die gemäß dem in der Kommunikationsverbindung verwendeten Kommunikationsstandard für den physikalischen Transport formatierten Kommunikationsdaten wirkenden Kommunikationsschicht, insbesondere einer Transaktionsschicht bei PCI Express, angewendet wird. Auf diese Weise ist mithin hardwareunterstütztes Filtern innerhalb der Transaktionsschicht (Transaction Layer) möglich. Das bedeutet, die Filterung kann gezielt möglichst nah am physikalischen Empfang der Kommunikationsdaten platziert werden, um deren Einfluss auf die Datenverarbeitungseinrichtung, insbesondere Speichermittel und/oder die Recheneinheit, zu minimieren. In der Transaktionsschicht haben die Daten noch das durch den Kommunikationsstandard, hier insbesondere PCI Express, definierte Übertragungsformat. Soll auf Inhalte, insbesondere also Nutzdaten, durch wenigstens eine Zulassungsbedingung direkt zugegriffen werden und sind die Nutzdaten verschlüsselt, wäre ein derartiges Filtermittel unmittelbar nach geeigneten Entschlüsselungsmitteln vorzusehen.

Wie bereits erwähnt, sieht eine zweckmäßige Ausgestaltung vor, dass ein als Teil eines Mikrochips, der die Schnittstelleneinheit bildet, realisiertes Filtermittel als das Filtermittel verwendet wird. Das Filtermittel kann also konkret hardwaretechnisch durch eine Modifikation eines entsprechenden Schnittstelleneinheit-Mikrochips realisiert werden, mithin seitens der Hardware fest in den Verarbeitungsablauf integriert werden. Insbesondere kann es sich hierbei um einen PCIe-Chip handeln.

Das Filtermittel ist bevorzugt ausschließlich durch die Datenverarbeitungseinrichtung selbst konfigurierbar, wie dargestellt, wobei konkret vorgesehen sein kann, dass das Filtermittel, insbesondere ausschließlich, durch die Recheneinheit konfiguriert wird. Die Recheneinheit, beispielsweise eine CPU, hat dabei also bevorzugt alleinigen Konfigurationszugang zu dem Filtermittel, was eine größtmögliche Autonomie und Flexibilität der Datenverarbeitungseinrichtung selbst sichert, nachdem beispielsweise auch auf Angriffe reagiert werden kann, indem die Zulassungsbedingungen verschärft werden oder die Kommunikationsverbindung gänzlich deaktiviert wird.

In einer konkreten Ausgestaltung kann vorgesehen sein, dass wenigstens eine der wenigstens einen Nutzdaten bewertenden Zulassungsbedingungen eine Minimallänge und/oder Maximallänge einer Nutzdateneinheit, insbesondere eines Steuerbefehls, und/oder eine Einschränkung der Funktionsart eines durch die Nutzdaten beschriebenen Steuerbefehls und/oder eine Einschränkung des zugreifbaren Speicherbereichs des wenigstens einen Speichermittels überprüft. Mithin ist eine Einschränkung der zulässigen Nutzdaten in den Kommunikationsdaten zunächst beispielsweise über die Länge einer Nutzdateneinheit, die beispielsweise in einen Speicherbereich des Speichermittels geschrieben werden soll, definierbar. So kann beispielsweise, je kleiner eine Nutzdateneinheit, beispielsweise ein Steuerbefehl, ist, angenommen werden, dass eine schädliche Nutzdateneinheit weniger Schaden in der Datenverarbeitungseinrichtung auszurichten vermag. Im Kommunikationsstandard und/oder durch entsprechende Ausgestaltung der Filtermittel kann auch zwischen unterschiedlichen Funktionstypen bei durch die Nutzdaten beschriebenen Steuerbefehlen unterschieden werden, beispielsweise diese auf unterschiedliche Arten und Weisen klassifiziert werden, so dass eine besonders bevorzugte Ausgestaltung der Erfindung vorsieht, dass eine Zulassungsbedingung bestimmte Funktionsarten/Funktionsklassen ausschließt. Dies wiederum schließt bestimmte Arten des Zugriffs, insbesondere auf Speichermittel, in der Datenverarbeitungseinrichtung aus, beispielsweise Schreibzugriffe, Manipulationszugriffe und dergleichen. Schließlich kann in einer dritten konkreten Ausgestaltungsmöglichkeit vorgesehen sein, den Speicherbereich, den die Nutzdaten der Kommunikationsdaten nutzen dürfen, beispielsweise in den sie eingespeichert werden dürfen, zu beschränken. Häufig zielen Nutzdaten/Steuerbefehle durch ihre entsprechende Struktur auf die Nutzung bestimmter Speicherbereiche von Speichermitteln der Datenverarbeitungseinrichtung ab, welche gegebenenfalls besonders relevant für die sicherheitskritische Funktionalität der Datenverarbeitungseinrichtung sein können, weswegen derartige, besonders sicherheitskritische Bereiche beispielsweise über eine Zulassungsbedingung ausgeschlossen werden können. Eine besonders bevorzugte Ausführungsform ergibt sich, wenn Zulassungsbedingungen für alle diese Kriterien verwendet werden, da dann beispielsweise auch Umgehungslösungen wie Zerstückelung von Gesamt-Steuerbefehlen bei Größeneinschränkung und dergleichen vermieden werden können.

Zusätzlich zu den inhaltsbezogenen Zulassungsbedingungen können im Rahmen der vorliegenden Erfindung vorteilhaft auch weitere Zulassungsbedingungen verwendet werden, durch die eine die Kommunikationsverbindung und/oder den Kommunikationspartner beschreibende Kommunikationseigenschaft ausgewertet wird. Beispielsweise ist es bei dem Kommunikationsstandard PCI Express bekannt, den jeweiligen Kommunikationspartner innerhalb der Kommunikationsinformation genauso zu identifizieren wie die konkret genutzte Kommunikationsverbindung zu diesem Kommunikationspartner, falls mehrere Kommunikationsverbindungen eingesetzt werden. Auch diesbezüglich kann das Filtermittel also, wie grundsätzlich bekannt, Einschränkungen vorsehen.

Die Eingangssignale von dem Filtermittel an die Angriffsdetektionseinheit können zweckmäßigerweise genauer beschreiben, aufgrund der Verletzung welcher wenigstens einen Zulassungsbedingung Pakete abgewiesen wurden, nachdem entsprechende Kombinationen von Eigenschaften charakteristisch für Angriffe oder die Art der Angriffe sein kann. Insbesondere können die Zulassungsbedingungen und/oder der Angriffsdetektionsregelsatz gezielt so abgestimmt aufeinander ausgelegt werden, dass die Klassifizierung von Angriffen besonders einfach und verlässlich ermöglicht wird. Derartige Ablehngründe können insbesondere auch eine Überschreitung eines zulässigen Kommunikationsdatendurchsatzes umfassen. Eine andere wichtige Ressource für Eingangssignale sind die abgelehnten Kommunikationsdaten, also Pakete/Nachrichten, selbst. Zweckmäßig ist es, insbesondere bei der Auswertung des Angriffsdetektionsregelsatzes und/oder einer zeitlich nachfolgenden, beispielsweise extern durchgeführten Auswertung auch die Historie abgelehnter Kommunikationsdaten betrachten zu können. Dafür kann die Angriffsdetektionseinheit insbesondere einen Ringpuffer umfassen, in dem eine bestimmte Anzahl zuletzt abgelehnter Kommunikationsdatensätze, insbesondere Pakete und/oder Nachrichten, vorgehalten werden. Deren Anzahl kann dabei von den aktuell gültigen Zulassungsbedingungen abhängig gemacht werden, beispielsweise, indem bei weniger abgelehnten Kommunikationsdaten weniger Nachrichten vorgehalten werden, bei mehr abgelehnten Kommunikationsdaten mehr. In einem Beispiel kann der Ringpuffer die einhundert letzten abgelehnten Kommunikationsdatensätze aufnehmen.

Zweckmäßig erweisen sich als Eingangssignale für die Angriffsdetektionseinheit, die von dem Filtermittel stammen, auch Statistikinformationen zu aufgrund der Konfigurationsinformation nicht weitergeleiteten Kommunikationsdaten, beispielsweise, wie viele Kommunikationsdatensätze pro Zeiteinheit abgelehnt wurden oder dergleichen. Insbesondere kann seitens eines Angreifers versucht werden, andere Angriffe durch eine Vielzahl offensichtlicher Angriffe zu kaschieren oder deren Auswertung zu verhindern, was entsprechend festgestellt werden kann.

In einer zweckmäßigen Weiterbildung kann vorgesehen sein, dass die Konfigurationsinformation ein Sicherheitslevel mit zugeordneten Zulassungsbedingungen und/oder Parametern der Zulassungsbedingungen beschreibt. Mithin können konkret vorgegebene Konfigurationsinformationen für verschiedene Sicherheitslevel verwendet werden, so dass das entsprechende Sicherheitslevel besonders einfach durch Konfigurationszugriff auf die Filtermittel innerhalb der Datenverarbeitungseinrichtung angepasst werden kann. Beispielsweise können sechzehn Sicherheitslevel vorgesehen werden, die sich mithin beispielsweise über zwei Byte beschreiben lassen, welche schrittweise Beschränkungen für die Kommunikationsdaten lockern. In Abhängigkeit von dem Sicherheitslevel kann auch der erwähnte Ringpuffer der Angriffsdetektionseinheit hinsichtlich der Anzahl vorgehaltener Kommunikationsdatensätze konfiguriert werden.

Zusammenfassend bezüglich der Sicherheitseinheit und/oder des Filtermittels kann also gesagt werden, dass es im Rahmen der vorliegenden Erfindung besonders bevorzugt ist, wenn wenigstens eines der Eingangssignale des Filtermittels wenigstens eine der folgenden Informationen beschreibend erzeugt wird:
- einen Initialisierungsfehler bei einem Aufbau einer Kommunikationsverbindung, insbesondere ein fehlender Schlüssel von wenigstens einem der Kommunikationspartner,
- eine zu große oder zu geringer Zahl verschlüsselter Pakete bei einer partiellen Verschlüsselung über eine Kommunikationsverbindung,
- aufgrund der Konfigurationsinformation nicht weitergeleitete Kommunikationsdaten, insbesondere zur Speicherung in einem Ringpuffer,
- eine Überschreitung eines zulässigen Kommunikationsdatendurchsatzes und
- Statistikinformationen zu aufgrund der Konfigurationsinformation nicht weitergeleiteten Kommunikationsdaten.

Selbstverständlich sind, wie oben in den verschiedenen Beispielen angedeutet, auch eine Vielzahl weiterer, nützlicher Informationen als Eingangssignale denkbar.

Die Angriffsdetektionseinheit nutzt Eingangssignale von wenigstens der Sicherheitseinheit und/oder dem Filtermittel, bevorzugt von mehreren Komponenten der Datenverarbeitungseinrichtung, und wertet sie hinsichtlich eines möglichen Angriffs aus, idealerweise vollkommen unabhängig vom restlichen Betrieb der Datenverarbeitungseinrichtung, was es insbesondere ermöglicht, einem Angreifer die Illusion zu geben, seine Tätigkeit sei noch gar nicht festgestellt worden. Es wird also vorzugsweise eine zusätzliche Hardware innerhalb der Datenverarbeitungseinrichtung hinzugefügt, die wenigstens Hardware-Signalverbindungen von verschiedenen hardwarebasierten Komponenten der Datenverarbeitungseinrichtung zu dem abgetrennten IDS umfasst. Die Verwendung eines derart abgetrennten IDS vermeidet die Verwendung reiner, angreifbarer Software, fügt mithin keine neuen Angriffspunkte hinzu, da das IDS über die zusätzlichen, anderweitigen nicht genutzten Hardware-Signalverbindungen arbeitet und mit den sonstigen Recheneinheiten idealerweise nicht empfangend oder angreifbar interagiert. Somit ist auch ein minimaler Einfluss auf existierende Sicherheitsmechanismen gegeben und es ist sichergestellt, dass das IDS selbst in einem sicheren Bereich der Datenverarbeitungseinrichtung vorgesehen ist. Die Detektion eines Angriffs bzw. einer Korruption der Datenverarbeitungseinrichtung kann nicht hinter einem infizierten, insbesondere bereits übernommenen Teil der Datenverarbeitungseinrichtung versteckt werden; die Nutzung getrennter, bevorzugt zusätzlicher Hardware ermöglicht es ferner, dass IDS ohne Einbußen der Rechenleistung der Recheneinheiten umzusetzen.

Der Angriffsdetektionsregelsatz kann, muss aber nicht zwangsläufig, als Teil der Angriffsdetektionseinheit realisiert sein. Denkbar ist es auch, den Angriffsdetektionsregelsatz anderweitig, also dezentral, bevorzugt als Hardware vorzusehen, beispielsweise an den Komponenten, die Eingangsdaten an die Angriffsdetektionseinheit liefern. Eine dezentrale Ausgestaltung des Angriffsdetektionsregelsatzes kann die Rechenleistung, die für die Angriffsdetektionseinheit vorgesehen werden muss, weiter reduzieren.

Wie bereits erwähnt, sieht eine besonders vorteilhafte Ausgestaltung vor, dass die Angriffsdetektionseinheit als eine eigene Hardwarekomponente der Datenverarbeitungseinrichtung realisiert ist, beispielsweise als ein ASIC und/oder eine eigene, zusätzliche Recheneinheit (CPU/Rechenkern). Die Angriffsdetektionseinheit stellt somit eine für die Recheneinheiten unsichtbare Hardwarekomponente dar, die im Hintergrund, unbeeinflusst von sonstigen Vorgängen innerhalb der Datenverarbeitungseinrichtung, ihre Überwachung auf Angriffe gemäß des Angriffsdetektionsregelsatzes vornehmen kann. In dieser Variante sind weder zusätzliche Angriffspunkte realisiert, noch ist für einen Angreifer nachvollziehbar, ob sein Angriff bereits festgestellt wurde oder nicht. Darüber hinaus ist anzumerken, dass selbst dann, wenn der Angreifer wüsste, dass er bemerkt worden wäre, keine Möglichkeit bestünde, seine Taten zu verschleiern. Dies ist im Hinblick auf die Forensik nach dem Angriff besonders vorteilhaft. Ferner sind in dieser bevorzugten Ausgestaltung keinerlei Einbußen hinsichtlich der Rechenleistung der Datenverarbeitungseinrichtung gegeben, da auf die diese Rechenleistung definierenden Recheneinheiten keinerlei Einfluss genommen wird, falls nicht, wie noch genauer erläutert werden wird, eine Maßnahme dies erfordert. Dabei ist die Hardware-Signalverbindung bevorzugt als eine speziell für die zu übertragenden Signale ausgelegte, nur in eine Richtung nutzbare Signalleitung ausgebildet.

Es sei angemerkt, dass es in einer Ausgestaltung der Erfindung auch denkbar ist, dass die Angriffsdetektionseinheit wenigstens teilweise als ein Anteil der Sicherheitseinheit ausgebildet ist. Dies ermöglicht eine höhere Integration und nutzt ohnehin in einem abgetrennten Sicherheitsbereich vorgesehene Hardware, ermöglicht allerdings keine den Sicherheitsanforderungen entsprechende Überwachung der Sicherheitseinheit selber.

Allgemein sei an dieser Stelle noch angemerkt, dass der Angriffsdetektionsregelsatz, der in der Angriffsdetektionseinheit abgelegt bzw. durch diese zugreifbar ist, auch als eine "IDS-Policy" verstanden werden kann. Je nachdem, inwieweit die Eingangssignale bereits seitens der diese sendenden Komponenten der Datenverarbeitungseinrichtung vorausgewertet sind, kann der Angriffsdetektionsregelsatz lediglich Regelungen zur Protokollierung von Ereignissen, mithin zur Informationsfilterung, und/oder zur Maßnahmenauswahl enthalten; denkbar ist es jedoch auch, wie bereits angedeutet wurde, dass der Angriffsdetektionsregelsatz eine Grundlage für eine Klassifizierung eines Ereignisses als Angriff oder gar der Art des Angriffs liefern kann, mithin beispielsweise, gegebenenfalls zusätzlich zu anderweitig abgelegten Zugriffstabellen, erlaubte und nicht erlaubte Ereignisse beschreiben bzw. diesen Angriffsklassen zuordnen kann.

Während die Angriffsdetektionseinheit bevorzugt gezielt als ein PCIe-IDS, welches in Kraftfahrzeuge besonders nützlich einsetzbar ist, vorgesehen werden kann, mithin insbesondere lediglich Eingangssignale von den PCIebezogenen Komponenten der Datenverarbeitungseinrichtung, hier der Sicherheitseinheit und dem Filtermittel, entgegennimmt, sind auch weitergehende Ausgestaltungen denkbar, in denen die Angriffsdetektionseinheit Eingangssignale von allen wichtigen Komponenten der Datenverarbeitungseinrichtung, insbesondere von allen Koordinationskomponenten, erhält. Die Überwachung des Ein-/Ausgabebetriebs durch Empfangen von diesbezüglichen Eingangssignalen hat sich jedoch als zentral erwiesen, nachdem Angriffe zum einen von außen in die Datenverarbeitungseinrichtung erfolgen müssen, zum anderen aber in im Wesentlichen allen Fällen die Angriffe eine Kommunikation nach außerhalb der Datenverarbeitungseinrichtung bewirken, so dass die Kommunikation mit weiteren Datenverarbeitungseinrichtungen ein wesentlicher zu überwachender Punkt ist, der mit der erfindungsgemäßen Ausgestaltung in jedem Fall abgegriffen wird.

In diesem Kontext sei nochmals darauf hingewiesen, dass es besonders vorteilhaft ist, wenn bei einer teilweisen Implementation der Angriffsdetektion durch Erzeugung entsprechender Eingangssignale für die Angriffsdetektionseinheit innerhalb der Sicherheitseinheit und/oder des Filtermittels bevorzugt eine Ausgestaltung gewählt wird, bei der die entsprechende Signalerzeugung für auf die Hardware-Signalverbindung zu gebende Eingangssignale für die Angriffsdetektionseinheit hardwarecodiert und unveränderbar festgelegt erfolgt, was dies die Sicherheit deutlich erhöht. Bei einer Auswertung größtenteils durch die Angriffsdetektionseinheit und den darin abgelegten Angriffsdetektionsregelsatz kann jedoch, wie im Folgenden noch näher diskutiert werden wird, insbesondere auch eine Implementation aufgrund der deutlichen Trennung des IDS von den Recheneinheiten/virtuellen Rechenkomponenten derart erfolgen, dass dynamische Veränderungen möglich sind, beispielsweise eine Veränderung des Angriffsdetektionsregelsatzes.

In einer Ausgestaltung kann wenigstens eine der wenigstens einen mittels einer Hardware-Signalverbindung mit der Angriffsdetektionseinheit verbundenen Komponente zur Vorauswertung und/oder Filterung der an die Angriffsdetektionseinheit zu übertragenden Eingangssignale ausgebildet sein. Das bedeutet, ein Teil der Intelligenz des IDS kann bereits innerhalb der Eingangssignale liefernden Komponente realisiert werden, indem beispielsweise nur spezielle Signale an die Angriffsdetektionseinheit weitergeleitet werden, die bereits vorgefiltert sind und/oder Ergebnis einer Vorauswertung sind. Bevorzugt sind diese komponentenseitigen Anteile der Signalverarbeitung unveränderbar in Hardware codiert festgelegt, wofür entsprechende Verfahren im Stand der Technik bereits bekannt sind, um einen manipulativen Angriff bereits an dieser Stelle zu vermeiden. Auf diese Weise kann die Unverfälschtheit der an die Angriffsdetektionseinheit weitergeleiteten Eingangssignale, zumindest solange kein Hardware-Angriff erfolgt, sichergestellt werden.

Zur Erhöhung der Sicherheit kann weiterhin vorgesehen sein, dass der Angriffsdetektionsregelsatz, mithin die erwähnte IDS-Policy, als Hardware unveränderbar festgelegt ist oder in einem gesicherten Verfahren, insbesondere unter Verwendung einer in der Datenverarbeitungseinrichtung als Hardware unveränderbar codierten geheimen Information, beispielsweise der Schlüsselinformation, veränderbar ist. Dabei ist es bevorzugt, eine Veränderbarkeit in einem gesicherten Verfahren zu erlauben, nachdem die Angriffsdetektionseinheit, wie dargelegt wurde, bevorzugt ohnehin so ausgebildet ist, dass Recheneinheiten bzw. andere gegebenenfalls manipulierende Komponenten keinerlei manipulativen Zugriff auf die Angriffsdetektionseinheit ausüben können. Durch Hinterlegung einer geheimen, insbesondere auch geteilten, Information und einen bevorzugt getrennten Konfigurationsanschluss für die Angriffsdetektionseinheit besteht die Möglichkeit, in einem gesicherten Verfahren, beispielsweise unter Verwendung von Schlüsseln als geheime Information, den Angriffsdetektionsregelsatz zu aktualisieren bzw. im Allgemeinen anzupassen. Die geheime Information kann dabei als Teil oder speziell verbunden mit der Angriffsdetektionseinheit codiert werden, wobei jedoch auch denkbar ist, eine ohnehin vorgesehene, festgelegte und unveränderbare geheime Information der Datenverarbeitungseinrichtung zu nutzen, beispielsweise eine in der Sicherheitseinheit wie beschrieben abgelegte Schlüsselinformation. In einer Alternativausgestaltung kann auch eine einmalige Festlegung des Angriffsdetektionsregelsatzes vorgesehen werden, beispielsweise bei der Produktion der Datenverarbeitungseinrichtung und/oder durch einmalige Programmierbarkeit zu einem späteren Zeitpunkt, beispielsweise bei der Herstellung einer Gesamtvorrichtung, insbesondere eines Kraftfahrzeugs, die die Datenverarbeitungseinrichtung enthalten soll. Zur Protokollierung sind unterschiedliche Ansätze denkbar, die auch in Kombination verwendet werden können. So kann vorgesehen sein, dass die Angriffsdetektionseinheit, insbesondere in Abhängigkeit von dem Angriffsdetektionsregelsatz, zur Protokollierung eines als Angriff klassifizierten Ereignisses in einer internen und/oder einer externen Speichereinrichtung und/oder zur Weitergabe des als Angriff klassifizierten Ereignisses an eine zu dem Ein-Chip-System externe Recheneinrichtung ausgebildet ist. Es ist also zum einen eine interne Protokollierung in einer internen Speichereinrichtung denkbar, welche beispielsweise zu einem späteren Zeitpunkt ausgelesen werden kann, um möglicherweise stattgefundene Angriffe analysieren zu können und Daten zur Verbesserung der Datenverarbeitungseinrichtung bzw. der auf ihr genutzten Softwaremittel ermitteln zu können. Denkbar und erfindungsgemäß bevorzugt ist es jedoch auch, eine externe Protokollierung mittels einer externen Speichereinrichtung und/oder einer externen Recheneinrichtung vorzunehmen. In diesem Zusammenhang ist es zwar grundsätzlich denkbar, aber weniger bevorzugt, eine eigene Ein-/Ausgabeeinheit für die Angriffsdetektionseinheit vorzusehen, nachdem derartige speziell vorgesehene Ein-/Ausgabeeinheiten platzaufwendig und die Komplexität der Datenverarbeitungseinrichtung erhöhend realisiert werden müssen. Daher wird es erfindungsgemäß bevorzugt, wenigstens eine der wenigstens einen auch durch die Recheneinheit nutzbaren Schnittstelleneinheit einzusetzen. Hierzu können beispielsweise Hardware-Ausgangsleitungen der Angriffsdetektionseinheit zu den Recheneinheiten und/oder der Schnittstelleneinheit realisiert sein, die bevorzugt unidirektional sind, um einen Zugriff über diese Hardware-Ausgangsleitungen auf die Angriffsdetektionseinheit zu vermeiden. Kommunikation über eine Schnittstelleneinheit zu einer externen Speichereinrichtung/Recheneinrichtung kann beispielsweise über wenigstens eine der Recheneinheiten erfolgen, wobei bevorzugt bei einer geringen oder eins betragenden Anzahl von Recheneinheiten die sichersten bzw. sicherste Recheneinheiten/Recheneinheit verwendet werden/wird. Mit anderen Worten wird zur Weitergabe nach außen dann eine Recheneinheit angesprochen, die voraussichtlich bei einem Angriff eher zu einem späteren Zeitpunkt, wenn überhaupt, übernommen werden kann. Zweckmäßig kann es auch sein, die entsprechenden Ausgangssignale zur Weitergabe/Protokollierung eines als Angriff klassifizierten Ereignisses an alle Recheneinheiten der Datenverarbeitungseinrichtung weitergegeben werden, da es unwahrscheinlich ist, dass alle diese Recheneinheiten bereits kompromittiert sind, so dass die Weiterleitung des Ausgangssignals über die Schnittstelleneinheit im Wesentlichen sichergestellt werden kann.

Zweckmäßigerweise kann zur Weitergabe an die externe Recheneinrichtung und/oder die externe Speichereinrichtung eine Datenverarbeitungseinrichtungs-Kennung den das als Angriff klassifizierte Ereignis beschreibenden Ereignisdaten, insbesondere also dem Ausgangssignal, hinzugefügt werden. Auf diese Weise kann in der externen Speichereinrichtung/externen Recheneinrichtung auch festgestellt werden, auf welche Datenverarbeitungseinrichtung sich die Ereignisdaten beziehen.

Allgemein ist bei der Auswertung der Eingangssignale bevorzugt, wenn die Angriffsdetektionseinheit bei der Auswertung der Eingangssignale zur Ermittlung von einen Verursacher eines als Angriff klassifizierten Ereignisses und/oder von die Art des Ereignisses beschreibenden Ereignisdaten ausgebildet ist, wobei insbesondere auch den Zeitpunkt des Ereignisses beschreibende Ereignisdaten ermittelt werden. Für ein Ereignis ist es mithin zweckmäßig, im Hinblick auf eine erfolgende Auswertung protokollierter Ereignisse und/oder Ergreifung von Maßnahmen zu wissen, welche Komponente der Datenverarbeitungseinrichtung was getan hat, das als zumindest potentieller Angriff klassifiziert wurde. Einen besonders nützlichen Anteil an Ereignisdaten stellen zudem die zuletzt abgelehnten Kommunikationsdatensätze, wie beschrieben, dar. Ist ein Zeitstempel verfügbar, beispielsweise bereits in den Eingangssignalen, bietet es sich an, auch diesen den Ereignisdaten hinzuzufügen. Dabei ist es zweckmäßig, die Angriffsdetektionseinheit selbst nicht mit einem Zeitgeber zu versehen, da dieser mit den restlichen Zeitgebern der Datenverarbeitungseinrichtung synchronisiert werden müsste, was einen möglichen Angriffspunkt zu der Angriffsdetektionseinheit darstellen könnte.

Bei Durchführung von Schutzmaßnahmen als Maßnahmen bei zumindest einem Teil als Angriff klassifizierter Ereignisse ergibt sich neben der Realisierung eines IDS (Intrusion Detection System) auch die Realisierung eines IPS (Intrusion Prevention System), kombiniert also eines IDPS (Intrusion Detection and Prevention System). In diesem Fall kann also gesagt werden, dass die Angriffsdetektionseinheit zusätzlich als wenigstens eine Schutzmaßnahme bei zumindest einem Teil als Angriff klassifizierter Ereignisse auslösende Angriffspräventionseinheit ausgebildet ist.

In diesem Kontext ist es besonders vorteilhaft, wenn die Schutzmaßnahmen beschreibende Maßnahmensignale über Hardware-Maßnahmenverbindungen an die von der Maßnahme betroffenen Komponenten der Datenverarbeitungseinrichtung und/oder an alle Recheneinheiten übermittelbar sind. Diese Hardware-Maßnahmenverbindungen sind bevorzugt unidirektional von der Angriffsdetektionseinheit zu den entsprechenden Komponenten der Datenverarbeitungseinrichtung ausgebildet, um Zugriff von den Komponenten auf die Angriffsdetektionseinheit zu vermeiden. Schutzmaßnahmen können dabei beispielsweise das Abschalten und/oder Resetten von Recheneinheiten und/oder weiteren Komponenten der Datenverarbeitungseinrichtung und/oder die Veränderung von Betriebsparametern, beispielsweise von Taktfrequenzen und/oder Zugriffserlaubnissen, umfassen. Auch die Beendigung und der Neustart bestimmter Applikationen (falls das System nur teilweise korrumpiert ist) sind denkbar. Der Vorteil bei Datenverarbeitungssystemen, wie beispielsweise in Kraftfahrzeugen, ist, dass aber auch andere Datenverarbeitungseinrichtungen die Schutzmaßnahmen durchführen können, diese mithin entfernt von einem durch einen Angreifer korrumpierten System erfolgen kann. Verteilte Systeme bieten mithin die Möglichkeit zur ebenso verteilten Realisierung eines IDPS, was die Schutzmaßnahmen angeht, was besonders in Kraftfahrzeugen als Gesamtvorrichtungen vorteilhaft umgesetzt werden kann. Dort können mithin beispielsweise Schutzmaßnahmen durch andere Steuergeräte umgesetzt werden. Genutzt werden können die Hardware-Ausgangsleitungen, mit denen auch auf einer externen Recheneinrichtung und/oder Speichereinrichtung protokolliert werden kann.

Im allgemeinen sind jedoch viele Schutzmechanismen bereits durch die Sicherheitseinheit und die Filtermittel gegeben, so dass die Angriffsdetektionseinheit als ein reines IDS realisierend umgesetzt werden kann, mithin die Maßnahmen der Protokollierung dienen.

Die Datenverarbeitungseinrichtung ist erfindungsgemäß als ein Ein-Chip-System (SoC) realisiert. Dabei sei insbesondere auch auf die Ausführungen in der bereits erwähnten nachveröffentlichten DE 10 2017 219 242.9 verwiesen, in denen die Realisierung einer Angriffsdetektionseinheit eines IDS als Teil eines Ein-Chip-Systems beschrieben ist. Auch für solche hochintegrierten Ausgestaltungen lässt sich die vorliegende Erfindung mithin einsetzen.

Eine erfindungsgemäße Gesamtvorrichtung kann gebildet werden, indem deren Datenverarbeitungssystem wenigstens zwei erfindungsgemäße Datenverarbeitungseinrichtungen aufweist, die insbesondere als "endpoints" über PCIe miteinander kommunizieren. Zwischen den unterschiedlichen, erfindungsgemäß ausgebildeten Datenverarbeitungseinrichtungen können dann die entsprechenden Authentifizierungs-, verschlüsselten Kommunikations- und Filtervorgänge stattfinden.

In einer anderen Ausgestaltung der vorliegenden Erfindung, denselben Erfindungsgedanken nutzend, kann auch eine Gesamtvorrichtung mit wenigstens zwei Datenverarbeitungseinrichtungen vorgesehen werden, wobei die Datenverarbeitungseinrichtungen jeweils wenigstens eine Recheneinheit und wenigstens eine ein paketbasiertes Kommunikationsprotokoll, insbesondere PCI Express, nutzende Schnittstelleneinheit aufweisen. Die Gesamtvorrichtung weist ferner eine die Datenverarbeitungseinrichtungen als Endpunkte ("endpoints") verbindende Brückeneinrichtung mit wenigstens einer Schnittstelleneinheit des Kommunikationsprotokolls auf. In diesem Fall kann sich eine derartige Gesamtvorrichtung dadurch auszeichnen, dass die Brückeneinrichtung ferner eine insbesondere als Hardware realisierte Angriffsdetektionseinheit aufweist, die über wenigstens eine Signalverbindung, insbesondere eine Hardware-Signalverbindung, mit wenigstens einem Filtermittel der wenigstens einen Schnittstelleneinheit verbunden ist und von dem Filtermittel erhaltene Eingangssignale bezüglich einer zu protokollierenden und/oder mit wenigstens einer Maßnahme zu beantwortenden Regelverletzung eines Angriffsdetektionsregelsatzes auswertet, wobei das wenigstens teilweise als Hardware ausgebildete Filtermittel dazu ausgebildet ist, gemäß einer wenigstens eine Zulassungsbedingung, die wenigstens eine Eigenschaft der in von der Schnittstelleneinheit empfangene Kommunikationsdaten enthaltenen Nutzdaten bewertet, enthaltenden, datenverarbeitungseinrichtungsseitig vorgegebenen Konfigurationsinformation nur die wenigstens eine Zulassungsbedingung erfüllende Kommunikationsdaten über die wenigstens eine Schnittstelleneinheit einer Ziel-Datenverarbeitungseinrichtung weiterzuleiten, wobei sich wenigstens eine Angriffsdetektionsregel auf die Verletzung wenigstens einer Zulassungsbedingung bezieht.

Anstatt oder zusätzlich zu einem IDS in "endpoints", also den Datenverarbeitungseinrichtungen selber, kann das IDS auch in einer Brückeneinrichtung, beispielsweise einem Switch- oder einem Multiplexer-Demultiplexer und/oder einem Hub, realisiert werden, wenn die Filterung der Daten mittels der Filtermittel innerhalb der Brückeneinrichtung umgesetzt wird. Dabei wird die Kommunikation mithin an einer zentralen, insbesondere für die Datenverarbeitungseinrichtungen unsichtbaren Stelle überwacht, an der auch entsprechende Filtermittel vorgesehen sind. Insbesondere ergibt sich bei dem Einsatz in einer solchen zentralen Brückeneinrichtung die Möglichkeit, Eingangssignale verschiedener Kommunikationsverbindungen zwischen Datenverarbeitungseinrichtungen zusammenzuführen und in Zusammenschau hinsichtlich eines insbesondere auf die Zulassungsbedingungen abgestimmten Angriffsdetektionsregelsatzes auszuwerten, was insbesondere eine genauere und verlässlichere Klassifikation von Ereignissen als Angriffe bzw. sogar der Art des Angriffs ermöglichen kann.

Für beide Varianten der Gesamtvorrichtung gelten selbstverständlich die bereits genannten Vorteile bezüglich der Datenverarbeitungseinrichtung analog fort. Auch entsprechende Ausgestaltungen lassen sich übertragen.

Mit besonderem Vorteil lassen sich die erfindungsgemäßen Neuerungen allgemein innerhalb eines Kraftfahrzeugs als Gesamtvorrichtung einsetzen, wobei bevorzugt vorgesehen sein kann, dass wenigstens eine Datenverarbeitungseinrichtung ein Steuergerät ist. In modernen Kraftfahrzeugen liegen meist komplizierte Datenverarbeitungssysteme vor, an die höchste Anforderungen gestellt werden, insbesondere an die beteiligten Steuergeräte. Dabei sei jedoch darauf hingewiesen, dass es sich bei den Datenverarbeitungseinrichtungen in einem Kraftfahrzeug als Gesamtvorrichtung nicht zwangsläufig um Steuergeräte handeln muss, sondern es durchaus denkbar ist, andere Datenverarbeitungseinrichtungen einzubinden, beispielsweise Sensoren, Anzeigeeinrichtungen, Bedienelemente, Brückeneinrichtungen und dergleichen. Auch eine Einbindung eines Backend-Servers ist denkbar.

Gerade bei Kraftfahrzeugen, aber auch bei Gesamtvorrichtungen allgemein, kann es bei vorgesehenen Schlüsselinformationen zweckmäßig sein, wenn die Schlüsselinformationen gesamtvorrichtungsspezifisch sind, um die Sicherheit weiter zu erhöhen. Die Schlüsselinformationen können dann beispielsweise seitens eines Herstellers in einer Datenbank vorgehalten werden, um gezielt Erweiterungen und/oder Ersetzungen bezüglich der Datenverarbeitungssysteme der Gesamtvorrichtungen kontrollieren zu können.

Ferner ist es bei verteilte Systeme darstellenden Datenverarbeitungssystemen vorteilhaft denkbar, dass bei einer Realisierung eines IDPS durch die Angriffsdetektionseinheit wenigstens eine Schutzmaßnahme durch eine externe, weitere Datenverarbeitungseinrichtung erfolgt. Auf diese Weise wird die korrumpierte Datenverarbeitungseinrichtung bei den Schutzmaßnahmen umgangen.

Schließlich betrifft die vorliegende Erfindung auch ein Verfahren zum Betrieb einer erfindungsgemäßen Datenverarbeitungseinrichtung oder einer erfindungsgemäßen Gesamtvorrichtung, wobei das Filtermittel nur die wenigstens eine Zulassungsbedingung erfüllende Kommunikationsdaten weiterleitet und die Angriffsdetektionseinheit über die Signalverbindung empfangene Eingangsdaten hinsichtlich einer Regelverletzung des Angriffsdetektionsregelsatzes auswertet. Sämtliche Ausführungen bezüglich der Datenverarbeitungseinrichtung und der Gesamtvorrichtungen lassen sich analog auf das erfindungsgemäße Verfahren übertragen, so dass mit diesem die genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze einer ersten erfindungsgemäßen Gesamtvorrichtung,
- Fig. 2: eine Skizze zur teilweisen Verschlüsselung,
- Fig. 3: eine mögliche Definition von Sicherheitslevels,
- Fig. 4: eine Prinzipskizze einer zweiten erfindungsgemäßen Gesamtvorrichtung, und
- Fig. 5: ein Kraftfahrzeug als Gesamtvorrichtung.

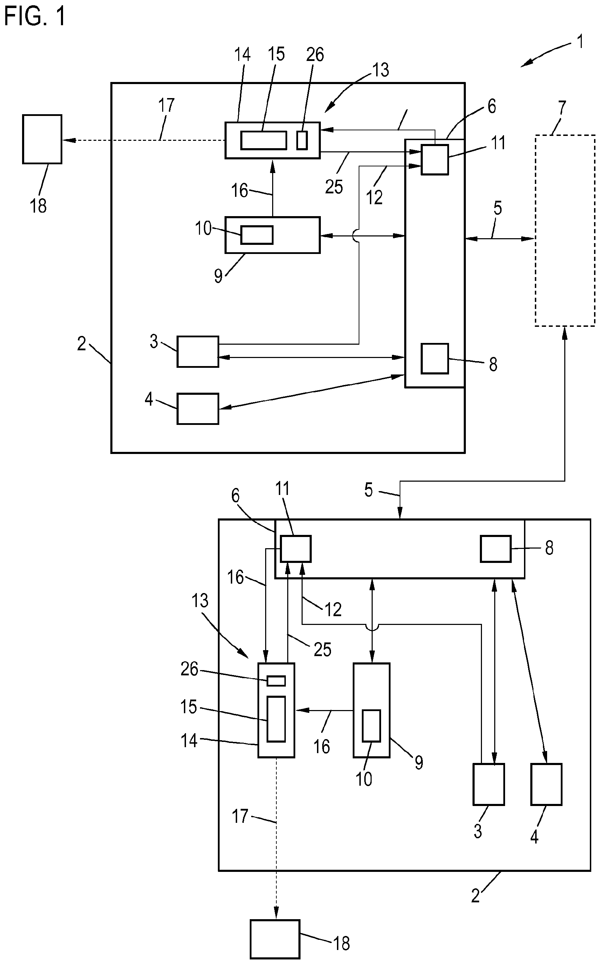

Fig. 1 zeigt ein erstes Ausführungsbeispiel einer erfindungsgemäßen Gesamtvorrichtung 1. Diese weist vorliegend beispielhaft zwei gezeigte erfindungsgemäße Datenverarbeitungseinrichtungen 2 auf, die jeweils wenigstens eine Recheneinheit 3, beispielsweise eine CPU, aufweisen. Die Recheneinheit 3 kann beispielsweise eine Rich Execution Environment (REE) mit einem Betriebssystem bereitstellen, welches das Interrupt-Handling, Treiber, Anwendungen und dergleichen verwalten kann. Selbstverständlich kann wenigstens eine der wenigstens einen Recheneinheit 3 auch eine Trusted Execution Environment (TEE) bilden. Die Datenverarbeitungseinrichtungen 2 weisen ferner wenigstens ein Speichermittel 4 auf, welches auch innerhalb der Recheneinheit 3 realisiert sein kann.

Dabei sei bereits an dieser Stelle angemerkt, dass es sich bei den Datenverarbeitungseinrichtungen 2 wenigstens teilweise um Ein-Chip-Systeme handeln kann; zudem kann wenigsten ein Teil der Datenverarbeitungseinrichtungen 2 als Steuergeräte eines Kraftfahrzeugs als Gesamtvorrichtung 1 ausgebildet sein.

Die Datenverarbeitungseinrichtungen 2 sollen über eine PCIe-Kommunikationsverbindung 5 miteinander kommunizieren können, weswegen sie beide jeweils eine Schnittstelleneinheit 6, die als PCIe-Mikrochip ausgebildet sein kann, aufweisen, die in einer Interrupt- und Nutzdatenverbindung mit der Recheneinheit 3 steht, wie grundsätzlich bekannt. Dabei ist es nicht wesentlich, ob die Kommunikationsverbindung 5 direkt oder über eine hier nur angedeutete Brückeneinrichtung 7, die als Switch, Hub, Multiplexer/Demultiplexer oder dergleichen ausgebildet sein kann, hergestellt wird, wobei auf eine spezielle Ausgestaltung der Brückeneinrichtung 7 im Hinblick auf das später zu diskutierende zweite Ausführungsbeispiel noch eingegangen werden wird.

Die Kommunikationsverbindung 5 nutzt mithin den PCIe-Kommunikationsstandard zur Hochgeschwindigkeits-Datenübertragung.

Als Teil einer Authentifizierungsanordnung ist hardwaremäßig in die Schnittstelleneinheiten 6 jeweils ein Verschlüsselungs-/Entschlüsselungsmittel 8 integriert, welches vorliegend abhängig von einem ausgehandelten Sessionschlüssel für die Kommunikationssitzung Nutzdaten ver- bzw. entschlüsseln kann. Das Verschlüsselungs-/Entschlüsselungsmittel 8 ist dabei der Transaktionsschicht (transaction layer) des PCIe-Kommunikationsprotokolls zuzuordnen. Das bedeutet, die Verschlüsselung/Entschlüsselung wird auf die physikalisch zu transportierenden Daten (TLPs - Transaction Layer Packages) angewendet.

Das Aushandeln der Sessionschlüssel erfolgt über eine weitere Komponente der Authentifizierungsanordnung, nämlich eine Sicherheitseinheit 9, die vorliegend als eigener Mikrochip vorgesehen ist, konkret als Trusted Platform Module (TPM), jedoch auch als vertrauenswürdige Zone oder Sicherheitselement auf einem die Recheneinheit 3 und/oder die Schnittstelleneinheit 6 realisierenden Mikrochip vorgesehen sein kann. Wesentlich ist, dass sowohl das Betriebssystem der Sicherheitseinheit 9 als auch eine in der Sicherheitseinheit 9 abgelegte Schlüsselinformation 10, vorliegend umfassend wenigstens einen für beide Datenverarbeitungseinrichtungen 2 gleichen Basisschlüssel, hardwarecodiert, mithin unveränderlich, sind. Die Sicherheitseinheit 9 bildet somit eine vertrauenswürdige Laufzeitumgebung, mithin eine sogenannte Trusted Execution Environment (TEE), auf die insbesondere die jeweilige Recheneinheit 3 keinerlei steuernden oder beeinflussenden Zugriff hat.

Das vertrauenswürdige Betriebssystem der Sicherheitseinheit 9 führt alle sicherheitsrelevanten Berechnungen durch, vorliegend also insbesondere sowohl das Verwalten der Schlüsselinformation 10 als auch das Aushandeln eines Sessionschlüssels, der dann basierend auf der Schlüsselinformation 10 als "shared information" ermittelt wird, so dass eine verschlüsselte Kommunikation zwischen den Datenverarbeitungseinrichtungen 2 nur bei übereinstimmender bzw. aufeinander abgestimmter Schlüsselinformation 10 möglich ist, was eine Authentifizierung darstellt. Ist eine Verschlüsselung möglich, wissen mithin beide der Datenverarbeitungseinrichtungen 2, dass der jeweilige Kommunikationspartner autorisiert ist, so dass eine gegenseitige Authentifizierung gegeben ist. Hinzugefügte und/oder veränderte Datenverarbeitungseinrichtungen, die die Schlüsselinformation 10 nicht aufweisen, können so entdeckt und als nicht zulässiges Gerät festgestellt werden. Es ist auch denkbar, einen von der Schlüsselaushandlung getrennten Authentifizierungsvorgang vorzusehen, beispielsweise der Schlüsselaushandlung vorgeschaltet als Voraussetzung für diese. Dann muss nicht zwangsläufig die Schlüsselinformation in den Sessionschlüssel oder dessen Aushandlung eingehen.

Es sei noch angemerkt, nachdem vorliegend eine symmetrische Basisverschlüsselung gegeben ist, dass auch mehrere Basisschlüssel verwendet werden können, die insbesondere von einem Rootkey abgeleitet sein können, der die Sicherheitseinheit 9 niemals verlässt. Auf diese Weise können unterschiedliche Basisschlüssel für unterschiedliche Modelle der Gesamtvorrichtung 1, unterschiedliche Regionen und/oder unterschiedliche Zeiträume geschaffen werden, um die Sicherheit weiter zu erhöhen. Es ist ferner bevorzugt, wenn der (insbesondere als Rootkey dienende) Basisschlüssel der Schlüsselinformation 10 gesamtvorrichtungsindividuell ist, mithin für jede Gesamtvorrichtung 1 ein eigener, individueller Rootkey und somit eine eigene, individuelle Schlüsselinformation 10 vorhanden ist.

Es sei noch angemerkt, dass die jeweiligen Sicherheitseinheiten 9 wenigstens einen Absicherungsmechanismus aufweisen, der es zumindest erschwert, durch Manipulation an der Sicherheitseinheit 9 selber an die Schlüsselinformation 10 zu gelangen.

In die Schnittstelleneinheit 6 hardwaretechnisch integriert, das bedeutet, fest im entsprechenden Mikrochip vorgesehen, sind vorliegend auch Filtermittel 11, welche aufgrund einer Konfigurationsinformation eingehende Kommunikationsdaten gegen verschiedene Zulassungsbedingungen prüfen, wobei nur bei Erfüllung aller Zulassungsbedingungen die in den Kommunikationsdaten enthaltenen Nutzdaten auch tatsächlich an die weiteren Komponenten der Datenverarbeitungseinrichtung 2, hier die Recheneinheit 3 und das Speichermittel 4, weitergegeben werden. Wenigstens eine der Zulassungsbedingungen wertet dabei eine Eigenschaft der in den Kommunikationsdaten enthaltenen Nutzdaten aus, wobei sich weitere Zulassungsbedingungen auch auf den Kommunikationspartner und/oder die Kommunikationsverbindung 5 selbst beziehen können.

Das Filtermittel 11 ist dabei lediglich von innerhalb der Datenverarbeitungseinrichtung 2 konfigurierbar, vorliegend ausschließlich durch die Recheneinheit 3 und/oder die später noch zu erläuternde Angriffsdetektionseinheit 14. Hierfür kann ein entsprechender, getrennter Konfigurationskanal vorgesehen sein, es kann jedoch auch eine für Konfigurationszwecke ohnehin genutzte Kommunikationsschnittstelle der Schnittstelleneinheit 6 eingesetzt werden. Der Konfigurationszugriff wird in Fig. 1 durch einen Pfeil 12 für die Recheneinheit 3 angedeutet. Auch eine Konfiguration zur Herstellung der Gesamtvorrichtung 1 ist denkbar. Beispielsweise bei Kraftfahrzeugen kann vorgesehen sein, eine vorbekannte Konfigurationsinformation aufgrund des bekannten Satzes an Befehlen/Nachrichten/Signalen zu verwenden, die sich nicht mehr ändert, bis auf ggf. Eingriffe durch das nun zu beschreibende IDS 13.

Die Datenverarbeitungseinrichtungen 2 weisen ferner jeweils das Angriffsdetektionssystem bzw. IDS 13 auf, welche eine als getrennte Hardware realisierte Angriffsdetektionseinheit 14 umfasst, in der ein Angriffsdetektionsregelsatz 15 abgelegt ist. Das IDS 13 bezieht sich vorliegend auf das PCIe-Kommunikationsprotokoll, welches für die Kommunikationsverbindung 5 genutzt wird, fasst mithin vorteilhaft die diesbezüglich sinnvollen Überwachungen zentral zusammen. Der Angriffsdetektionsregelsatz 15 erlaubt die Klassifizierung von durch Eingangssignale beschriebenen Ereignissen als Angriff bzw. kein Angriff, wobei selbstverständlich auch eine genaue Klassifizierung verschiedener Angriffe bzw. deren Kritikalität möglich ist.

Die Angriffsdetektionseinheit 14 erhält die Eingangssignale von dem Filtermittel 11 und der Sicherheitseinheit 9 über Hardware-Signalverbindungen 16, die unidirektional sind und keinen steuernden Zugriff auf die Angriffsdetektionseinheit 14 erlauben, die mithin passiv die durch das Filtermittel 11 und die Sicherheitseinheit 9 bereits gesicherte PCIe-Kommunikation überwacht und ggf. Angriffe wenigstens protokolliert, ggf. auch weitergehende Maßnahmen ergreift.

Die Eingangssignale können als Hardware-Interrupt und dergleichen unmittelbar erzeugt und ungefiltert/unvorausgewertet an die Angriffsdetektionseinheit 14 weitergeleitet werden, um möglichst wenig Angriffsmöglichkeiten zu bieten. Denkbar sind jedoch auch Ausgestaltungen, in denen eine Vorauswertung und/oder Filterung durch eine der Eingangssignale liefernden Komponenten erfolgt, um die Datenlast für die Angriffsdetektionseinheit 14 zu reduzieren und diese kleinbauender/weniger komplex zu realisieren. Bevorzugt erfolgt eine solche Vorauswertung und/oder Filterung seitens des Filtermittels 11 bzw. der Sicherheitseinheit 9 durch unveränderbare Hardware. Der Angriffsdetektionsregelsatz 15 kann unveränderbar in Hardware codiert, also einmalig festgelegt, in der Angriffsdetektionseinheit 14 abgelegt sein, wobei auch eine grundsätzlich veränderbare Ausgestaltung denkbar ist, wobei dann eine geheime, unveränderbar in der jeweiligen Datenverarbeitungseinrichtung 2 gespeicherte Information, beispielsweise die Schlüsselinformation 10, verwendet wird, um eine Authentifizierung bei einer Änderung vorzunehmen.

Der Angriffsdetektionsregelsatz 15 kann Klassifizierungen festlegen, beispielsweise wann und wie kritisch ein Angriff vorliegt. Ferner kann der Angriffsdetektionsregelsatz 15 beschreiben, wie mit detektierten Angriffen umgegangen werden soll, was also geschehen soll, wenn wenigstens ein Ereignis als ein Angriff klassifiziert wird. Dabei reichen die Maßnahmen von unterschiedlichen Protokollierungsaktionen bis hin zu möglicherweise vorgesehenen Schutzmaßnahmen, wobei im letzteren Fall die Angriffsdetektionseinheit 14 auch als Angriffspräventionseinheit ausgebildet ist, so dass sich insgesamt ein IDPS 13 ergibt (Intrusion Detection and Prevention System). Eine Protokollierung kann dabei mittels einer internen Speichereinrichtung erfolgen, zu der eine entsprechende Hardware-Ausgangsleitung führt, denkbar ist es jedoch auch, ein als Angriff klassifiziertes Ereignis beschreibende Ereignisdaten nach außerhalb der Datenverarbeitungseinrichtung 2 zu kommunizieren, wozu eine eigene Ein-/Ausgabeeinheit für die Angriffsdetektionseinheit 14 vorgesehen sein kann, oder aber die Kommunikation über die wenigstens eine Recheneinheit 3 und/oder die Schnittstelleneinheit 6 erfolgen kann.

Somit ist es möglich, die Ereignisdaten zur Protokollierung und/oder zur weiteren Verarbeitung, insbesondere auch hinsichtlich von Schutzmaßnahmen, wie durch den Pfeil 17 angedeutet, an eine externe Speichereinrichtung und/oder Recheneinrichtung 18 weiterzuleiten. Die Ereignisdaten, die bevorzugt einen Verursacher eines als Angriff klassifizierten Ereignisses, die Art des Ereignisses und einen Zeitpunkt des Ereignisses beschreiben, werden durch eine Kennung der Datenverarbeitungseinrichtung ergänzt, so dass die externe Speichereinrichtung und/oder Recheneinrichtung 18 eine entsprechende Zuordnung vornehmen kann.

Die Eingangssignale beschreiben im vorliegenden Fall letztlich Authentifizierungs- und/oder Verschlüsselungsfehler (Sicherheitseinheit 9) bzw. abgelehnte Kommunikationsdaten (Filtermittel 11). Nachdem sich konkret nutzbare Eingangssignale aus der Arbeitsweise dieser Komponenten ergeben, sei diese im Folgenden zunächst näher dargelegt.

Zur gegenseitigen Authentifizierung können beispielsweise beide Datenverarbeitungseinrichtungen 2 initialisiert, beispielsweise hochgefahren, werden, woraufhin auch sowohl die Recheneinheit 3 als auch die Sicherheitseinheit 9 starten. Dies wird auch als Beginn einer Kommunikationssitzung angesehen, so dass in einem folgenden Schritt die Sicherheitseinheiten 9 über die Kommunikationsverbindung 5 miteinander einen Sessionschlüssel für die Kommunikationssitzung aushandeln, wobei auch hier bereits eine Verschlüsselung unter Nutzung der Schlüsselinformation 10 und des jeweiligen Verschlüsselungs-/Entschlüsselungsmittels 8 stattfinden kann. In jedem Fall wird der Sessionschlüssel unter Verwendung der Schlüsselinformation 10 ausgehandelt bzw. aus dieser abgeleitet.

In diesem Sinn kann dieser Schritt auch als ein Authentifizierungsvorgang verstanden werden, denn entweder bereits die Aushandlung des Sessionschlüssels oder aber später die Kommunikation mit verschlüsselten Daten wird fehlschlagen und somit klar anzeigen, dass der Kommunikationspartner nicht korrekt authentifiziert ist. Entsprechende Informationen eignen sich bereits hervorragend als Eingangssignale für die Angriffsdetektionseinheit 14, weswegen das bevorzugt in Hardware realisierte Betriebssystem der Sicherheitseinheit im Übrigen auch zur entsprechenden Weiterleitung solcher Eingangssignale an die Angriffsdetektionseinheit 14 über die entsprechende Hardware-Signalverbindung 16 ausgebildet ist.

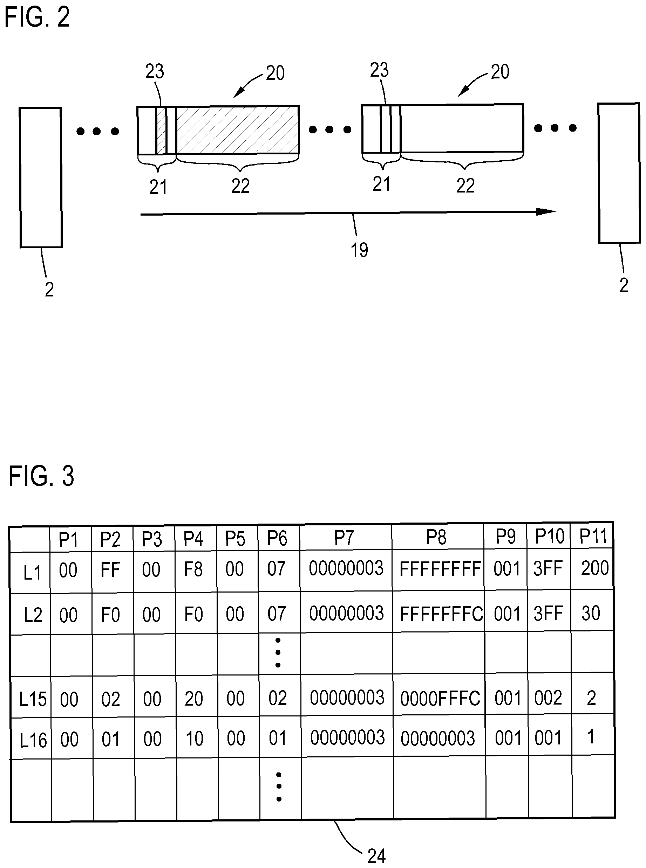

In einem abschließenden Schritt kann der Sessionschlüssel dann genutzt werden, um verschlüsselt zu kommunizieren. Dabei ist es nicht zwangsläufig nötig, jedes Nutzdatenpaket, hier konkret TLP, zu verschlüsseln, sondern es ist auch eine partielle Verschlüsselung denkbar, wie durch Fig. 2 näher erläutert werden soll. Angedeutet ist dort der Datentransport 19 zwischen den Datenverarbeitungseinrichtungen 2, wobei zwei unterschiedliche Nutzdatenpakete 20 (TLPs) gezeigt sind. Jedes der Nutzdatenpakete 20 umfasst dabei wenigstens einen Header 21 und Nutzdaten 22 (Payload). Im Header 21 befindet sich nun jeweils eine Informationseinheit 23, beispielsweise ein Verschlüsselungsbit bzw. Encryption-Bit, welches dann, wenn es gesetzt ist, anzeigt, dass die Nutzdaten 22 verschlüsselt sind (vgl. Schraffuren im linken Nutzdatenpaket 20), und, wenn es nicht gesetzt ist, anzeigt, dass die Nutzdaten 22 nicht verschlüsselt sind, vgl. das rechte Nutzdatenpaket 20 und die entsprechend fehlenden Schraffuren.

Die Rate der Nutzdatenpakete 20, die verschlüsselte Nutzdaten 22 enthalten, kann dabei auch dynamisch angepasst werden, beispielsweise in Abhängigkeit einer gewollten Datenübertragungsgeschwindigkeit.

Die partielle Verschlüsselung beziehungsweise entsprechende Abweichungen bilden ebenfalls eine Grundlage für nützliche Eingangssignale, beispielsweise, wenn zu viele oder zu wenige verschlüsselte Nutzdatenpakete 20 eintreffen. Eingangssignale für die Angriffsdetektionseinheit 14 können dies anzeigen.

Die Nutzung des Filtermittels 11 soll nun genauer erläutert werden. Dabei werden in einem ersten Schritt, vorliegend als Datenpakete, Kommunikationsdaten empfangen, die Nutzdaten 22 (Payload) sowie einen Header 21 umfassen. Nachdem die physikalische Schicht (Physical Layer) und die Datenverbindungschicht (Datalink Layer) durchlaufen sind, gelangen die Kommunikationsdaten in die Transaktionsschicht (Transaction Layer), wo die Datenpakete 20 (Transaction Layer Packets - TLP) auf das Filtermittel 11 treffen. Die entsprechende Filterung, das heißt die Überprüfung aller Zulassungsbedingungen für jedes eingehende Datenpaket, findet in einem zweiten Schritt statt. Wird dabei festgestellt, dass wenigstens eine der Zulassungsbedingungen nicht erfüllt ist, wird das Datenpaket verworfen und für das nächste Datenpaket 20 wieder zum ersten Schritt zurückgekehrt. Sind jedoch alle Zulassungsbedingungen erfüllt, werden die Kommunikationsdaten wie üblich in der Schnittstelleneinheit 6 weiterverarbeitet und an die weiteren Komponenten 3, 4 der Datenverarbeitungseinrichtung 2 weitergegeben.

Die Angriffsdetektionseinheit 14 nutzt Informationen über abgelehnte Nutzdatenpakete 20 (bzw. sonstige Kommunikationsdatensätze) als Eingangssignale, um festzustellen, ob ein Angriff vorliegt oder detektiert werden kann. Ist derartiges der Fall, kann als Schutzmaßnahme im Übrigen auch eine Umkonfigurierung der Filtermittel 11 über die Recheneinheit 3, Pfeil 12, oder aber direkt von der Angriffsdetektionseinheit 14, Pfeil 25, stattfinden, beispielsweise die Zulassungsbedingungen verschärft werden oder die Kommunikationsverbindung 5 gänzlich deaktiviert werden.

Im vorliegenden Ausführungsbeispiel sind hierfür bestimmte Sicherheitslevel mit zugeordneten Konfigurationsinformationen, die die Zulassungsbedingungen beschreiben, definiert. Dies wird durch die Tabelle 24 der Fig. 3 näher dargestellt. Jeder Zeile entspricht dabei ein Sicherheitslevel L1, L2, .... P1-P10 sind dabei Parameter von Zulassungsbedingungen. P1 und P2 beschreiben dabei die zulässigen laufenden Nummern von Kommunikationsverbindungen, P3 und P4 zulässige laufende Nummern von Kommunikationspartnern. P5-P10 beziehen sich auf inhaltsbezogene Zulassungsbedingungen. P5 und P6 beschreiben den Bereich zulässiger Funktionsarten (Funktionsklassen), P7 und P8 zulässige Speicherbereiche des wenigstens einen Speichermittels 4, in die Daten geschrieben werden dürfen, und P9 und P10 die Minimallänge und die Maximallänge von Nutzdateneinheiten. Die Spalte P11 betrifft den maximal zulässigen Nachrichtendurchsatz. So sind beispielsweise im L1 200 Nachrichten/Sekunde erlaubt, in L2 nur noch 30 Nachrichten/Sekunde etc. Nutzdateneinheiten können dabei Steuerbefehlen entsprechen, jedoch sind auch andere Nutzdaten 22 durch das Filtermittel 11 behandelbar.

Wie zu erkennen ist, kann beispielsweise das Sicherheitslevel L1 keinerlei Beschränkungen in der Kommunikation mit sich bringen, während das Sicherheitslevel L16 lediglich Signale auf der ersten Kommunikationsverbindung für den Kommunikationspartner Nr. 16 und die erste Funktionsklasse erlaubt. Der Zielspeicherbereich und die Datenmenge sind ebenso klar definiert und beschränkt.

Ein geeignetes Sicherheitslevel L1, L2, ... kann, wie beschrieben, seitens der Recheneinheit 3 und/oder der Angriffsdetektionseinheit 14 auch dynamisch gewählt werden.

Von dem Filtermittel 11 an die Angriffsdetektionseinheit 14 gelieferte Eingangssignale umfassen mit besonderem Vorteil, wenigstens zur Protokollierung, aufgrund der Zulassungsbedingungen abgelehnte Nutzdatenpakete 20 (TLPs) selbst, wofür vorliegend in der Angriffsdetektionseinheit 14 ein Ringpuffer 26 vorgesehen ist, in dem eine bestimmte Anzahl der zuletzt nicht weitergeleiteten Kommunikationsdatensätze, insbesondere Nutzdatenpakete 20, gespeichert werden können, beispielsweise die letzten 100. Dabei kann eine Auswertung durch den Angriffsdetektionsregelsatz 15 unmittelbar stattfinden, oder aber bei einer Analyse nach einem erfolgten Angriff ein Zugriff auf die dort gespeicherten Kommunikationsdatensätze erfolgen, um möglichst genaue Informationen über den Angriff zu erhalten, beispielsweise seitens der externen Speichereinrichtung und/oder Recheneinrichtung 18. Insbesondere bei höheren Sicherheitsleveln kann diese Funktionalität aufgrund der Vielzahl abgelehnter Nachrichten auch gänzlich abgeschaltet werden oder aber der Ringpuffer 26, falls möglich, entsprechend erweitert werden. Insbesondere ist es also möglich, die Anzahl der in dem Ringpuffer 26 vorzuhaltenden Kommunikationsdatensätze, insbesondere abgelehnter Nutzdatenpakete 20, abhängig vom aktuell eingestellten Sicherheitslevel des Filtermittels 11 zu wählen.

Eingangssignale des Filtermittels 11 an die Angriffsdetektionseinheit 14 können ferner Statistikinformationen über abgelehnte Kommunikationsdaten, beispielsweise die relative Anzahl abgelehnter Nutzdatenpakete 20, und/oder die jeweils verletzten Zulassungsbedingungen enthalten, um eine möglichst genaue Analyse der Angriffssituation anhand des Angriffsdetektionsregelsatzes 15, der selbstverständlich auf die Zulassungsbedingungen abgestimmt ist, zu erlauben. Eine Statistikinformation kann insbesondere auch zyklisch an die Angriffsdetektionseinheit 14 geliefert werden, um dort ausgewertet zu werden, beispielsweise auch hinsichtlich eines Nachrichtendurchsatzes/Kommunikationsdatensatzes (vgl. auch P11 in Fig. 3). Die Bewertung kann dabei, wenn die Konfigurationsinformation auch in der Angriffsdetektionseinheit 14 bekannt ist, auch dort auf Basis der Statistikinformation erfolgen.

Zusammenfassend kann die Angriffsdetektionseinheit 14 aufgrund der Eingangssignale mithin folgende Fehlfunktionen/potentiellen Angriffe bzw. diesbezügliche Informationen analysieren: Probleme mit der Initialisierung, beispielsweise fehlende gesendete oder empfangene Sessionschlüssel, zu viele oder zu wenige verschlüsselte Nutzdatenpakete 20 bei Verwendung einer teilweisen Verschlüsselung (vgl. Erläuterung zu Fig 2), Kommunikationsdatensätze, die das Filtermittel 11 nicht passieren und insbesondere im Ringpuffer 26 gespeichert sind, und Statistikinformationen über Verletzungen der Zulassungsbedingungen abhängig vom Sicherheitslevel.

Es sei darauf hingewiesen, dass es in einer alternativen Ausgestaltung auch möglich ist, die Angriffsdetektionseinheit 14 als Teil der Sicherheitseinheit 9 vorzusehen, wobei dann gegebenenfalls deren Eingangssignale nicht mehr mit der hinreichenden Sicherheit berücksichtigt werden können.

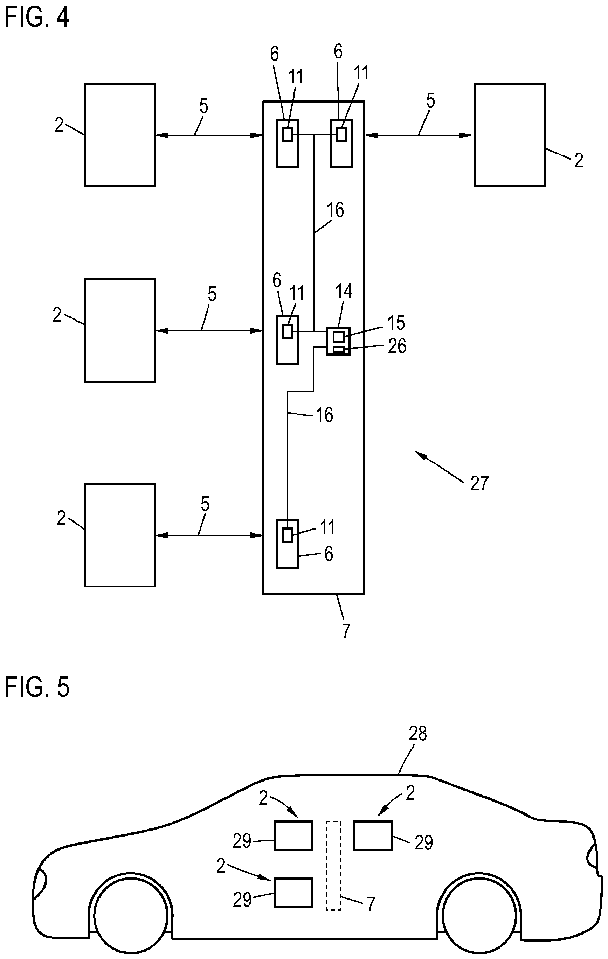

Fig. 4 zeigt eine zweite Ausführungsform einer erfindungsgemäßen Gesamtvorrichtung 27, bei der die Datenverarbeitungseinrichtungen 2 entsprechend der Darstellung in Fig. 1 ausgebildet sein können, jedoch nicht zwangsläufig eine Angriffsdetektionseinheit 14 und ein Filtermittel 11 aufweisen müssen. Denn im vorliegenden Fall sind die Filtermittel 11 in jedem Fall innerhalb von Schnittstelleneinheiten 6 der Brückeneinrichtung 7 vorgesehen, welche auch eine Angriffsdetektionseinheit 14 mit entsprechendem Angriffsdetektionsregelsatz 15 sowie optional wenigstens einem Ringpuffer 26 für abgelehnte Kommunikationsdatensätze aufweist. Über Hardware-Signalverbindungen 16 sind die Filtermittel 11 wiederum mit der Angriffsdetektionseinheit 14 verbunden, wobei der Angriffsdetektionsregelsatz 15 in diesem Fall auch Kommunikationsverbindungen 5 übergreifend Analysen aufgrund abgelehnter Kommunikationsdatensätze bzw. allgemein dieser beschreibender Eingangssignale vornehmen kann.

Fig. 5 zeigt schließlich schematisch eine als Kraftfahrzeug 28 ausgebildete Gesamtvorrichtung, die wie die Gesamtvorrichtung 1 oder wie die Gesamtvorrichtung 27 ausgebildet sein kann. Als Datenverarbeitungseinrichtungen 2 sind dabei eine Vielzahl von Steuergeräten 29 vorgesehen, wobei selbstverständlich auch andere Datenverarbeitungseinrichtungen 2 innerhalb des Kraftfahrzeugs 28 vorliegen können. Die Datenverarbeitungseinrichtungen 2 bzw. Steuergeräte 29 können wenigstens teilweise als Ein-Chip-Systeme ausgebildet. Die Datenverarbeitungseinrichtungen 2 des Kraftfahrzeugs 28 kommunizieren über PCIe miteinander, wobei die oben beschriebenen Sicherheitsmaßnahmen und IDS/IDPS 13 vorgesehen sind, konkret in der Brückeneinrichtung 7 und/oder wenigstens einem Teil der Datenverarbeitungseinrichtungen 2.

## Patentansprüche

1. Datenverarbeitungseinrichtung (2), aufweisend wenigstens eine Recheneinheit (3) und wenigstens eine ein paketbasiertes Kommunikationsprotokoll, insbesondere PCI Express, nutzende Schnittstelleneinheit (6),
wobei die als ein Ein-Chip-System ausgebildete Datenverarbeitungseinrichtung (2) ferner eine insbesondere als Hardware realisierte Angriffsdetektionseinheit (14) aufweist, die über wenigstens eine Signalverbindung (16), insbesondere eine Hardware-Signalverbindung (16), mit einem Filtermittel (11) der Schnittstelleneinheit (6) und/oder einer als Trusted Execution Environment realisierten Sicherheitseinheit (9) einer auf das Kommunikationsprotokoll bezogenen Authentifizierungsanordnung verbunden ist und über die wenigstens eine Signalverbindung (16) erhaltene Eingangssignale bezüglich einer zu protokollierenden und/oder mit wenigstens einer Maßnahme zu beantwortenden Regelverletzung eines Angriffsdetektionsregelsatzes (15) auswertet, wobei das wenigstens teilweise als Hardware ausgebildete Filtermittel (11) dazu ausgebildet ist, gemäß einer wenigstens eine Zulassungsbedingung, die wenigstens eine Eigenschaft der in von der Schnittstelleneinheit (6) empfangenen Kommunikationsdaten enthaltenen Nutzdaten (22) bewertet, enthaltenden, datenverarbeitungseinrichtungsseitig vorgegebenen Konfigurationsinformation nur die wenigstens eine Zulassungsbedingung erfüllende Kommunikationsdaten von der Schnittstelleneinheit (6) zu wenigstens einer weiteren Komponente der Datenverarbeitungseinrichtung (2) weiterzuleiten, wobei sich wenigstens eine Angriffsdetektionsregel auf die Verletzung wenigstens einer Zulassungsbedingung und/oder auf einen Authentifizierungsfehler bezieht.

2. Datenverarbeitungseinrichtung (2) nach Anspruch 1,
**dadurch gekennzeichnet,**
**dass** die Authentifizierungsanordnung ein Verschlüsselungs-/Entschlüsselungsmittel (8) der Schnittstelleneinheit (6) zur Verschlüsselung wenigstens eines Teils der über eine Kommunikationsverbindung (5) mit einer weiteren Datenverarbeitungseinrichtung (2) übertragenen Nutzdaten (22), wobei das Verschlüsselungs-/Entschlüsselungsmittel (8) in einer Kommunikationsschicht des Kommunikationsprotokolls auf die für die physikalische Nutzdatenübertragung vorbereiteten Nutzdaten (22) bzw. die physikalisch empfangenen Nutzdaten (22) angewendet wird, und die als eigene Hardware, auf die die Recheneinheit (3) nicht zugreifen kann, und/oder logisch isoliert von der Recheneinheit (3) umgesetzte Sicherheitseinheit (9) mit einer hardwarecodierten Schlüsselinformation (10), in deren Abhängigkeit die Nutzdaten (22) durch das Verschlüsselungs-/Entschlüsselungsmittel (8) verschlüsselt werden, aufweist.

3. Datenverarbeitungseinrichtung (2) nach Anspruch 1 oder 2,
**dadurch gekennzeichnet,**
**dass** der die Eingangssignale für die Angriffsdetektionseinheit (14) erzeugende Anteil der Sicherheitseinheit (9) wenigstens teilweise als Hardware ausgebildet ist.

4. Datenverarbeitungseinrichtung (2) nach einem der vorangehenden Ansprüche,
**dadurch gekennzeichnet,**
**dass** wenigstens eines der Eingangssignale der Sicherheitseinheit (9) einen Authentifizierungsfehler und/oder einen Verschlüsselungsfehler beschreibt.

5. Datenverarbeitungseinrichtung (2) nach einem der vorangehenden Ansprüche,
**dadurch gekennzeichnet,**
**dass** die Angriffsdetektionseinheit (14) wenigstens teilweise als ein Anteil der Sicherheitseinheit (9) ausgebildet ist.

6. Datenverarbeitungseinrichtung (2) nach einem der vorangehenden Ansprüche,
**dadurch gekennzeichnet,**
**dass** wenigstens eines der Eingangssignale des Filtermittels (11) wenigstens eine der folgenden Informationen beschreibend erzeugt wird:
- einen Initialisierungsfehler bei einem Aufbau einer Kommunikationsverbindung (5), insbesondere ein fehlender Schlüssel von wenigstens einem der Kommunikationspartner,
- eine zu große oder zu geringer Zahl verschlüsselter Pakete bei einer partiellen Verschlüsselung über eine Kommunikationsverbindung (5),
- aufgrund der Konfigurationsinformation nicht weitergeleitete Kommunikationsdaten, insbesondere zur Speicherung in einem Ringpuffer (26),
- eine Überschreitung eines zulässigen Kommunikationsdatendurchsatzes und
- Statistikinformationen zu aufgrund der Konfigurationsinformation nicht weitergeleiteten Kommunikationsdaten.

7. Datenverarbeitungseinrichtung (2) nach einem der vorangehenden Ansprüche,
**dadurch gekennzeichnet,**
**dass** die Recheneinheit (3) und/oder die Angriffsdetektionseinheit (14) bei Detektion eines Angriff zur Umkonfigurierung des Filtermittels (11) ausgebildet sind.

8. Gesamtvorrichtung (1, 27) mit wenigstens zwei Datenverarbeitungseinrichtungen (2) nach einem der Ansprüche 1 bis 7.

9. Gesamtvorrichtung nach Anspruch 8,
**dadurch gekennzeichnet,**
**dass** bei einer Realisierung eines IDPS durch eine der Angriffsdetektionseinheiten (14) wenigstens eine Schutzmaßnahme durch eine externe, weitere Datenverarbeitungseinrichtung (2) erfolgt

10. Gesamtvorrichtung (1, 27) mit wenigstens zwei Datenverarbeitungseinrichtungen (2), die wenigstens eine Recheneinheit (3), und wenigstens eine ein paketbasiertes Kommunikationsprotokoll, insbesondere PCI Express, nutzende Schnittstelleneinheit (6) aufweisen, und eine die Datenverarbeitungseinrichtungen (2) als Endpunkte verbindende Brückeneinrichtung (7) mit wenigstens einer Schnittstelleneinheit (6) des Kommunikationsprotokolls,
**dadurch gekennzeichnet,**
**dass** die Brückeneinrichtung (7) ferner eine insbesondere als Hardware realisierte Angriffsdetektionseinheit (14) aufweist, die über wenigstens eine Signalverbindung (16), insbesondere eine Hardware-Signalverbindung (16), mit wenigstens einem Filtermittel (11) der wenigstens einen Schnittstelleneinheit (6) verbunden ist und von dem Filtermittel (11) erhaltene Eingangssignale bezüglich einer zu protokollierenden und/oder mit wenigstens einer Maßnahme zu beantwortenden Regelverletzung eines Angriffsdetektionsregelsatzes (15) auswertet, wobei das wenigstens teilweise als Hardware ausgebildete Filtermittel (11) dazu ausgebildet ist, gemäß einer wenigstens eine Zulassungsbedingung, die wenigstens eine Eigenschaft der in von der Schnittstelleneinheit (6) empfangenen Kommunikationsdaten enthaltenen Nutzdaten (22) bewertet, enthaltenden, datenverarbeitungseinrichtungsseitig vorgegebenen Konfigurationsinformation nur die wenigstens eine Zulassungsbedingung erfüllende Kommunikationsdaten über die wenigstens eine Schnittstelleneinheit (6) einer Ziel-Datenverarbeitungseinrichtung (2) weiterzuleiten, wobei sich wenigstens eine Angriffsdetektionsregel auf die Verletzung wenigstens einer Zulassungsbedingung bezieht.

11. Verfahren zum Betrieb einer Datenverarbeitungseinrichtung (2) nach einem der Ansprüche 1 bis 7 oder einer Gesamtvorrichtung (1, 27) nach Anspruch 8 oder 9, wobei das Filtermittel (11) nur die wenigstens eine Zulassungsbedingung erfüllende Kommunikationsdaten weiterzuleitet und die Angriffsdetektionseinheit (14) über die Signalverbindung (16) empfangene Eingangsdaten hinsichtlich einer Regelverletzung des Angriffsdetektionsregelsatzes (15) auswertet.

## Claims

1. Data-processing device (2), having at least one computing unit (3) and at least one interface unit (6) using a packet-based communication protocol, in particular PCI Express, wherein the data processing device (2) designed as a one-chip-system has an attack detection unit (14) particularly realised as hardware, which via at least one signal connection (16), in particular a hardware signal connection (16), is connected with a filtering means (11) of the interface unit (6) and/or a security unit (9), realised as a trusted execution environment, of an authentication arrangement related to the communication protocol and evaluates input signals received via the at least one signal connection (16) in regard to a breach of rules, to be recorded and/or to be responded to with at least one measure, of an attack detection set of rules (15), wherein the filtering means (11) formed at least partially as hardware is configured according to a data processing device side predetermined configuration information containing at least one admission condition, which evaluates at least one property of the useful data (22) contained in communication data received by the interface unit (6), to forward only the communication data from the interface unit (6) fulfilling the at least one admission condition to at least one further component of the data processing device (2), wherein at least one attack detection rule is related to the breach of at least one admission condition and/or to an authentication error.

2. Data-processing device (2) according to claim 1,
**characterised in**
**that** the authentication device has an encryption means/decryption means (8) of the interface unit (6) for the encryption of at least one part of the useful data (22) transmitted via the communication connection (5) with a further data processing device (2), wherein the encryption means/decryption means (8) is used in a communication layer of the communication protocol on the useful data (22) prepared for the physical useful data transmission or the physically received useful data (22), and the security unit (9) implemented as proprietary hardware to which the computing unit (3) has no access, and/or is logically insulated from the computing unit (3), with a hardware coded key information (10), on the basis of which the useful data (22) are encrypted by the encryption means/decryption means (8).

3. Data-processing device (2) according to claim 1 or 2,
**characterised in**
**that** the part of the security unit (9) generating the input signals for the attack detection unit (14) is realised at least partially as hardware.

4. Data-processing device (2) according to any of the preceding claims,
**characterised in**
**that** at least one of the input signals of the security unit (9) describes an authentication error and/or an encryption error.

5. Data-processing device (2) according to any of the preceding claims,
**characterised in**
**that** the attack detection unit (14) is at least partially in the form of a part of the security unit (9).

6. Data-processing device (2) according to any of the preceding claims
**characterised in**
**that** at least one of the input signals of the filtering means (11) is generated describing at least one of the following items of information:
- an initialisation error at the establishment of a communication connection (5), in particular a missing key of at least one of the communication partners,
- a number of encrypted packets which is too great or too low in the case of a partial encryption via a communication connection (5),
- communication data which are not forwarded by reason of the configuration information, in particular for storage in a circular buffer (26),
- an exceeding of a permissible communication data throughput and
- statistical information regarding communication data which have not been forwarded by reason of the configuration information.

7. Data-processing device (2) according to any of the preceding claims,
**characterised in**
**that** the computing unit (3) and/or the attack detection unit (14) are designed to reconfigure the filtering means (11) if an attack is detected.

8. Complete entity (1, 27) having at least two data-processing devices (2) according to any of claims 1 to 7.

9. Complete entity according to claim 8,
**characterised in**
**that** when an IDPS is realised by one of the attack detection units (14) at least one protection measure is carried out on the part of an external further data processing device (2).

10. Complete entity (1, 27) having at least two data-processing units (2), which have at least one computing unit (3) and at least one interface unit (6) using a packet-based communication protocol, in particular PCI Express, and a bridging device (7), connecting the data processing devices (2) as endpoints, having at least one interface unit (6) of the communication protocol,
**characterised in**
**that** the bridging device (7) has furthermore an attack detection unit (14) particularly realised as hardware, which via at least one signal connection (16), in particular a hardware signal connection (16), is connected with at least one filtering means (11) of the at least one interface unit (6) and evaluates input signals received by the filtering means (11) in regard to a breach of rules, to be recorded and/or to be responded to with at least one measure, of an attack detection set of rules (15), wherein the filtering means (11) formed at least partially as hardware is configured according to a data processing device side predetermined configuration information containing at least one admission condition, which evaluates at least one property of the useful data (22) contained in communication data received by the interface unit (6), to forward only the communication data from the interface unit (6) fulfilling the at least one admission condition to at least one further component of the data processing device (2), wherein at least one attack detection rule is related to the breach of at least one admission condition.

11. Method for operating a data processing device (2) according to any of claims 1 to 7 or of a complete entity (1, 27) according to claim 8 9, wherein the altering means (11) forwards only the communication data fulfilling at least one admission condition and the attack detection unit (14) evaluates input data received via the signal connection (16) with regard to a breach of the rule of the attack detection set of rules (15).

## Revendications

1. Dispositif de traitement de données (2), présentant au moins une unité de calcul (3) et au moins une unité d'interface (6) utilisant un protocole de communication à base de paquets, en particulier PCI Express, dans lequel le dispositif de traitement de données (2) formé comme un système monopuce présente en outre une unité de détection d'attaque (14) réalisée en particulier sous forme matérielle, qui est connectée par l'intermédiaire d'au moins une liaison par signal (16), en particulier une liaison par signal matérielle (16), avec un moyen de filtrage (11) de l'unité d'interface (6) et/ou d'une unité de sécurité (9), réalisée sous la forme d'un Trusted Execution Environment, d'un dispositif d'authentification relatif au protocole de communication, et qui évalue des signaux d'entrée reçus par l'intermédiaire de la au moins une liaison par signal (16), relatifs à une violation de règle d'un ensemble de règles de détection d'attaque (15) à journaliser et/ou devant faire l'objet d'une réponse avec au moins une mesure, dans lequel le moyen de filtrage (11) réalisé au moins en partie sous forme matérielle est formé pour, conformément à au moins une condition d'admission, qui évalue au moins une caractéristique des données utiles (22) contenues dans des données de communication reçues par l'unité d'interface (6), contenant une information de configuration prédéfinie au niveau du dispositif de traitement de données, transmettre uniquement les données de communication de l'unité d'interface (6) satisfaisant à au moins une condition d'admission à au moins un autre composant du dispositif de traitement de données (2), dans lequel au moins une règle de détection d'attaque concerne la violation d'au moins une condition d'admission et/ou une erreur d'authentification.

2. Dispositif de traitement de données (2) selon la revendication 1,
**caractérisé en ce**
**que** le dispositif d'authentification présente un moyen de chiffrement/déchiffrement (8) de l'unité d'interface (6) pour chiffrer au moins une partie des données utiles (22) transmises par l'intermédiaire d'une liaison de communication (5) avec un autre dispositif de traitement de données (2), dans lequel le moyen de chiffrement/déchiffrement (8) est appliqué dans une couche de communication du protocole de communication aux données utiles (22) préparées pour la transmission physique de données utiles ou pour les données utiles (22) physiquement reçues, et l'unité de sécurité (9) réalisée sous la forme de matériel à part, auquel l'unité de calcul (3) n'a pas accès, et/ou logiquement de manière isolée de l'unité de calcul (3) avec une information de clé codée sous forme matérielle (10), en fonction de laquelle les données utiles (22) sont chiffrées par le moyen de chiffrement/déchiffrement (8).

3. Dispositif de traitement de données (2) selon la revendication 1 ou 2,
**caractérisé en ce**
**que** la partie de l'unité de sécurité (9) produisant les signaux d'entrée pour l'unité de détection d'attaque (14) est formée au moins partiellement sous forme matérielle.

4. Dispositif de traitement de données (2) selon l'une quelconque des revendications précédentes,
**caractérisé en ce**
**qu'**au moins un des signaux d'entrée de l'unité de sécurité (9) décrit une erreur d'authentification et/ou une erreur de chiffrement.

5. Dispositif de traitement de données (2) selon l'une quelconque des revendications précédentes,
**caractérisé en ce**
**que** l'unité de détection d'attaque (14) est formée au moins partiellement comme une partie de l'unité de sécurité (9).

6. Dispositif de traitement de données (2) selon l'une quelconque des revendications précédentes,
**caractérisé en ce**
**qu'**au moins un des signaux d'entrée du moyen de filtrage (11) est produit en décrivant au moins une des informations suivantes :
- une erreur d'initialisation lors d'un établissement d'une liaison de communication (5), en particulier une clé manquante d'au moins un des partenaires de communication,
- un nombre trop grand ou trop petit de paquets chiffrés lors d'un chiffrement partiel à travers une liaison de communication (5),
- des données de communication non transmises en raison de l'information de configuration, en particulier en vue d'une mémorisation dans un tampon annulaire (26),
- un dépassement d'un débit de données de communication autorisé et
- des informations statistiques pour des données de communication non transmises en raison de l'information de configuration.

7. Dispositif de traitement de données (2) selon l'une quelconque des revendications précédentes,
**caractérisé en ce**
**que** l'unité de calcul (3) et/ou l'unité de détection d'attaque (14) sont formées pour modifier la configuration du moyen de filtrage (11) lors d'une détection d'une attaque.

8. Dispositif global (1, 27) avec au moins deux dispositifs de traitement de données (2) selon l'une quelconque des revendications 1 à 7.

9. Dispositif global selon la revendication 8,
**caractérisé en ce**
**que** lors d'une réalisation d'un IDPS par une des unités de détection d'attaque (14) au moins une mesure de protection est prise par un autre dispositif de traitement de données externe (2).

10. Dispositif global (1, 27) avec au moins deux dispositifs de traitement de données (2) qui présentent au moins une unité de calcul (3) et au moins une unité d'interface (6) utilisant un protocole de communication à base de paquets, en particulier PCI Express, et un dispositif de pontage (7) connectant des dispositifs de traitement de données (2) en tant que points d'extrémité avec au moins une unité d'interface (6) du protocole de communication,
**caractérisé en ce**
**que** le dispositif de pontage (7) présente en outre une unité de détection d'attaque (14) réalisée en particulier sous forme matérielle, qui est connectée par l'intermédiaire d'au moins une liaison par signal (16), en particulier une liaison par signal matérielle (16), avec au moins un moyen de filtrage (11) de la au moins une unité d'interface (6) et évalue des signaux d'entrée reçus par le moyen de filtrage (11) relatifs à une violation de règle d'un ensemble de règles de détection d'attaque (15) à journaliser et/ou devant faire l'objet d'une réponse avec au moins une mesure, dans lequel le moyen de filtrage (11) réalisé au moins en partie sous forme matérielle est formé pour, conformément à au moins une condition d'admission , qui évalue au moins une caractéristique des données utiles (22) contenues dans des données de communication reçues par l'unité d'interface (6), contenant de l'information de configuration prédéfinie au niveau du dispositif de traitement de données, transmettre à travers la au moins une unité d'interface (6) d'un dispositif de traitement de données cible (2), uniquement les données de communication satisfaisant à au moins une condition d'admission, dans lequel au moins une règle de détection d'attaque concerne la violation d'au moins une condition d'admission.

11. Procédé pour faire fonctionner un dispositif de traitement de données (2) selon l'une quelconque des revendications 1 à 7 ou un dispositif global (1, 27) selon la revendication 8 ou 9, dans lequel le moyen de filtrage (11) transmet uniquement les données de communication satisfaisant à au moins une condition d'admission et l'unité de détection d'attaque (14) évalue par l'intermédiaire de la liaison par signal (16) des données d'entrée reçues en ce qui concerne une violation de règle de l'ensemble de règles de détection d'attaque (15).
